# EUROPEAN PATENT SPECIFICATION

(11) **EP 0 887 692 B1**
(45) Date of publication and mention of the grant of the patent: **17.08.2005**
(21) Application number: 98305128.5
(22) Date of filing: 29.06.1998
(51) Int. Cl.: G02F 1/1335

(54) **Method of making a spatial light modulation**
Räumlicher Lichtmodulator und sein Herstellungsverfahren
Procédé de fabrication d'un modulateur spatial de lumière

(30) Priority: 28.06.1997 GB 9713627; 12.07.1997 GB 9714649; 24.03.1998 GB 9806313
(43) Date of publication of application: 30.12.1998
(73) Proprietor: Sharp Kabushiki Kaisha, Osaka-shi, Osaka 545-8522 (JP)
(72) Inventor: Jacobs, Adrian Marc Simon, Headington, Oxford OX3 9DH (GB); Harrold, Jonathan, Stanford-on-Thames, Oxford OX4 4XS (GB)
(74) Representative: Robinson, John Stuart

(56) References cited:
- EP-A- 0 703 470
- US-A- 5 049 427
- US-A- 5 179 457
- PATENT ABSTRACTS OF JAPAN vol. 011, no. 252 (P-605), 15 August 1987 (1987-08-15) & JP 62 058220 A (SEIKO EPSON CORP), 13 March 1987 (1987-03-13)

## Description

The present invention relates to a method of making a cell wall of a liquid crystal spatial light modulator and to a cell wall made by such a method. The invention also relates to a method of making a spatial light modulator and to a spatial light modulator made by such a method.

US 5 264 964 discloses a stereoscopic display which makes use of a pixellated polariser i.e. a polariser having regions of different polarisation directions. In particular, there are two sets of regions with one set of regions having a polarisation direction orthogonal to that of the other set. One set is associated with image portions of a right eye view whereas the other set is associated with image portions of a left eye view. However, the polariser is spaced by a significant distance from the image to be viewed and the resulting parallax results in a very limited freedom of movement for the observer to perceive a three dimensional (3D) image correctly. If the observer moves outside the viewing range, undesirable visual artefacts occur, such as pseudoscopic viewing in which the left eye of the observer sees some or all of the right view and vice versa.

JP 63-158525A discloses a flat liquid crystal stereoscopic device having internal polarising films comprising iodine absorbed on a stretched polyvinyl alcohol (PVA) film. However, a disadvantage of such iodine-doped films is that the aligned polyiodide structure providing the dichroic ability is readily destroyed by the high temperatures employed in the fabrication of liquid crystal devices (LCDs), which temperatures are typically of the order of 180°C. Dichroic dye-based systems have a smaller tendency to lose their alignment on heating but, like iodine, are unsuitable for use inside an LCD because they are readily soluble in liquid crystal materials. Thus, the iodine would not remain localised in the polariser in the structures disclosed in this patent specification but would instead contaminate the liquid crystal material. Such structures are therefore not suitable for use as internal polarisers within LCDs.

EP 0 397 263 discloses a method of incorporating a dichroic dye within the polymer network of a liquid crystalline polymer (LCP). However, such LCP networks are unable to provide sufficient alignment of the dichroic dye in order to provide simultaneously good transmission and high contrast ratio of the minimum specification for polarisers for use in thin film transistor (TFT) LCDs. For such applications, a contrast ratio (ratio of transmission of light polarised in the direction of the polariser to transmission of orthogonally polarised light) of greater than 100:1 and transmission (of light polarised in the direction of the polariser) of greater than 80% are required. Dichroic dye molecules, even when perfectly dichroic, do not accurately adopt the intrinsic alignment of the host liquid crystal polymer. Further, LCP materials have a limited degree of alignment known as the "order parameter". The small variation in the dye orientation reduces transmission and it is not possible to obtain high transmission without poor extinction of the orthogonal polarisation.

US 5 049 427 discloses a polariser derived from oriented dichroic stretched polymer films typically containing conjugated double bonds such as those containing polyacetylene. The polariser itself is very thin and is bonded to a transparent polymer substrate, such as cellulose tri-acetate (CTA) with a polyurethane based adhesive. The optical properties of such a polariser become slightly diminished after spending a thousand hours at 100°C, which conditions may occur when such a polariser is used as an external polariser of an LCD in a video projector.

Methods of making patterned optical waveplates are known. For instance, "Molecular architectures in thin plastic films by in-situ photopolymerisation of reactive liquid crystals", Phillips, SID 95 Digest discloses a technique based on selective photopolymerisation of reactive liquid crystals whereas "Surface induced parallel alignment of liquid crystals by linearly polymerised photopolymers" Schadt et al, Japanese Journal of Applied Physics, volume 31, 1992, page 2155 discloses a technique based on the photopolymerisation of liquid crystal alignment layers including non-contact alignment of liquid crystals obtained by cross-linking polyvinylmethoxycinnamate using polarised light. EP 0 689 084 discloses the use of reactive mesogen layers as optical elements and alignment surfaces.

Pancharatnam, Proc. Ind. Acad. Sci., 1955, 41A, pp 130 and 137 disclose achromatic retarders comprising combinations of retarders with different azimuthal orientations of their optic axes.

EP 0 800 105 discloses a PALC display with an internal polariser. The polariser is described as PVA. However, such a material provides a retardation function as opposed to a polarisation function and must be used to align a dye or other absorbing material such as iodine in order to provide a polarisation function. In order to prevent the iodine or dye from escaping from the PVA, additional layers are required to provide confinement. Such additional layers would substantially increase the thickness of the polariser and give rise to operating voltage problems.

In order to provide a functional display, alignment layers are required to provide appropriate alignment direction and pre-tilt conditions. However, the processing temperatures of standard liquid crystal alignment layers exceed 200° centigrade and the polariser material disclosed in EP 0 800 105 cannot survive such temperatures while retaining an adequate or effective polarisation function.

According to a first aspect of the invention, there is provided a method of making a cell wall of a liquid crystal spatial light modulator, comprising: forming a polariser made of a polymer comprising conjugated double bonds above a substrate; forming a first alignment layer above the polariser relative to the substrate; and curing the first alignment layer at substantially 180°C or up to substantially 180°C for two hours or up to substantially two hours.

The first alignment layer may be cured at substantially 120°C or up to substantially 120°C for substantially one hour or up to substantially one hour. The first alignment layer may comprise polyimide. Following completion of the cell wall including at least one elevated temperature processing step, the polariser may have a contrast ratio of at least 10:1 at at least one operating wavelength of the spatial light modulator. The contrast ratio may be 100:1. The at least one operating wavelength may comprise a waveband having an upper limit greater than or equal to 600 nanometres and a lower limit less than or equal to 510 nanometres. The upper limit may be greater than or equal to 700 nanometres and the lower limit may be less than or equal to 400 nanometres.

The polymer may contain polyacetylene.

Following completion of the cell wall including at least one elevated temperature processing step, the polariser may have a transmission of polarised light of at least 50%. The transmission may be at least 80%.

The polariser may be formed on an adherent layer. The adherent layer may comprise polyimide. After forming the polariser, the adherent layer may be cured at substantially 140°C or up to substantially 140°C for substantially thirty minutes or up to substantially thirty minutes.

In one embodiment, the adherent layer is formed on the substrate. In another embodiment, the adherent layer is formed on a colour filter arrangement carried by the substrate. In a further embodiment, the adherent layer is formed on an electrode carried by the substrate.

The electrode may be formed on the polariser.

At least one patterned retarder may be formed between the substrate and the first alignment layer before forming the first alignment layer.

The or each patterned retarder may be formed by: forming a second alignment layer; forming a retarder layer on the second alignment layer; and selectively removing part of the retarder layer.

The patterned retarder or one of the patterned retarders may be formed by: forming a second alignment layer; forming a retarder layer on the second alignment layer; curing part of the retarder layer by exposure to ultraviolet radiation; forming the polariser on the retarder layer; heating the retarder layer above its isotropic transition point; and exposing the retarder layer to ultraviolet radiation. The retarder layer may comprise a chiral retarder layer and the polariser may be formed on the retarder layer for which it acts as a further alignment layer. The absorption direction of the polariser may be substantially perpendicular to the alignment direction of the second alignment layer.

A plurality of patterned retarders may be formed with the alignment direction of the second alignment layer of each of the patterned retarders being different from the alignment direction of the second alignment layer of each other of the patterned retarders.

The or each patterned retarder may be formed by: forming a layer of linearly photopolymerisable material; exposing first parts of the material layer to radiation of a first polarisation; and exposing second parts of the material layer to radiation of a second polarisation.

The or each patterned retarder may be formed by: forming a second alignment layer; rubbing the second alignment layer in a first alignment direction; forming on the second alignment layer a mask which reveals predetermined regions of the second alignment layer; rubbing the predetermined regions in a second alignment direction different from the first alignment direction through the mask; removing the mask; and forming a retarder layer on the second alignment layer.

For a plasma addressed liquid crystal spatial light modulator, the substrate may include a plasma switching arrangement.

The plasma switching arrangement may comprise a plurality of channels, each of which contains a gas and first and second electrodes.

In one embodiment, the polariser is disposed between a liquid crystal material and the plasma switching arrangement. In another embodiment, the polariser is disposed inside the channels.

The substrate may be disposed between the polariser and an external polariser whose polarising direction is parallel to that of the polariser.

According to a second aspect of the invention, there is provided a method of making a liquid crystal spatial light modulator, comprising making a first cell wall by a method according to a first aspect of the invention, spacing the first cell wall from a second cell wall to form a gap, and filling the gap with a liquid crystal material.

The second cell wall may be made by a method according to the first aspect of the invention.

The alignment directions of the first alignment layers of the first and second cell walls may be substantially orthogonal. The liquid crystal material may comprise a nematic liquid crystal and a chiral dopant.

It is thus possible to provide a technique which allows internal polarisers, which may or may not be patterned or pixellated, to be formed inside LCDs. It has been unexpectedly found that internal polarising elements made of a polymer comprising conjugated double bonds can withstand the manufacturing conditions of such devices In particular, the heat treatment used to form various layers, such as alignment layers and electrodes, during manufacture unexpectedly does not reduce to unacceptable levels the polariser performance. Further, such polarisers do not cause contamination of other parts of the devices, such as liquid crystal layers. The formation of cell walls may involve temperatures up to 200°C but it has been found that, with the present invention, internal polarisers may be incorporated compatibly with the high temperature stages of LCD fabrication, in particular curing of alignment layers and deposition of electrodes such as indium tin oxide (ITO) electrodes.

The polariser may be formed from the active layer only and does not require any substrate when it is formed as part of a cell wall of an LCD.

Thus, the present invention allows the incorporation of a polariser inside an LCD in a manner which is compatible with standard alignment layer and other processing. Disposing the polariser between its substrate and the liquid crystal layer has the advantage that the substrate need not have or retain very low birefringence, as is necessary for external polarisers. Thus, the substrate may be made of lower quality glass or even cheap transparent plastics which exhibit substantial birefringence. Because the effects of such birefringence occur optically outside the LCD, they are not visible to observers, whose eyes are not sensitive to polarisation.

Further, the use of an internal polariser with or without a patterned retarder avoids problems of unwanted parallax. Spatial light modulators (SLMs) of this type are therefore suitable for use in 3D displays, for instance of the type disclosed in EP 0 721 132, the contents of which are incorporated herein by reference.

It is also possible to provide a PALC display in which the contrast-reducing effects of internal reflections from pillar structures of a plasma switching arrangement can be reduced or substantially eliminated. Further, any possible depolarisation effects of the PALC gas can be substantially avoided. The expense and difficulty of providing light-absorptive pillars can be avoided so that the brightness of a display can be increased without loss of contrast. An internal polariser can be used in conjunction with an external polariser so that the internal polariser may have a reduced specification without having a substantially detrimental effect on the performance of the display. Any interaction between a pillar black mask and the plasma can be avoided and the internal polariser may act as a protection layer for a thin dielectric glass of the plasma switching arrangement.

The invention will be further described, by way of example, with reference to the accompanying drawings, in which:
Figure 1 is a schematic cross-sectional diagram of an SLM constituting an embodiment of the invention;
Figure 2 is a schematic cross-sectional view of a cell wall constituting an embodiment of the invention;
Figure 3 is a schematic cross-sectional view of an SLM constituting an embodiment of the invention;
Figure 4 is schematic cross sectional view of an SLM of the type shown in Figure 1 including a TFT array;
Figure 5 is a schematic cross-sectional view showing a cell wall from which an alignment layer has optionally been omitted;
Figure 6 is a schematic cross-sectional view of a cell wall from which a transparent conducting electrode has optionally been omitted;
Figure 7 is a schematic cross-sectional view of a cell wall including a heat stabilisation layer;
Figure 8 is a schematic cross-sectional view of a cell wall constituting an embodiment of the invention;
Figure 9, which comprises Figure 9a to 9h, illustrates a method of making the cell wall of Figure 8;
Figure 10 is schematic cross-sectional view of a cell wall constituting an embodiment of the invention;
Figure 11, which comprises Figures 11a to 11i, illustrates a method of making the cell wall of Figure 10;
Figure 12 is a schematic cross-sectional view of a cell wall constituting an embodiment of the invention;
Figure 13, which comprises Figures 13a to 13g, illustrates a method of making the cell wall of Figure 12;
Figure 14 is a schematic cross-sectional view of a cell wall constituting an embodiment of the invention;
Figure 15, which comprises Figures 15a to 15g, illustrates a method of making the cell wall of Figure 14;
Figure 16 is a schematic cross-sectional view of an SLM constituting an embodiment of the invention;
Figure 17 is a schematic cross-sectional view of a cell wall constituting an embodiment of the invention;
Figure 18, which comprises Figures 18a to 18n, illustrates a method of making the cell wall of Figure 17;
Figure 19a is a schematic cross-sectional view of a cell wall constituting an embodiment of the invention;
Figure 19b is a diagrammatic plan view of one of the layers of the cell wall of Figure 19a;
Figure 20, which comprises Figures 20a to 20i, illustrates a method of making the cell wall illustrated in Figures 19a and 19b;
Figure 21a is a schematic cross-sectional view of a cell wall constituting an embodiment of the invention;
Figure 21b is a diagrammatic plan view of one of the layers of the cell wall of Figure 21a;
Figure 22, which comprises Figures 22a to 22m, illustrates a method of making the cell wall illustrated in Figures 21a and 21b;
Figure 23 comprises Figures 23a and 23b, which are cross-sectional diagrams of known types of PALC displays;
Figure 24 is a view similar to Figure 24b illustrating internal reflections which reduce contrast;
Figure 25 is a view similar to Figure 24 illustrating a known technique for reducing loss of contrast;
Figure 26 comprises Figures 26a and 26b, which are cross-sectional diagrams of PALC displays constituting embodiments of the invention;
Figure 27 comprises Figures 27a and 27b, which are cross-sectional diagrams of PALC displays constituting embodiments of the invention;
Figure 28 is cross-sectional diagram of a PALC display constituting an embodiment of the invention;
Figure 29 comprises Figures 29a and 29b, which are cross-sectional diagrams of PALC displays constituting embodiments of the invention;
Figure 30 comprises Figures 30a and 30b, which are cross-sectional diagrams of PALC displays constituting embodiments of the invention;
Figure 31 comprises Figures 31a and 31b, which are cross-sectional diagrams of PALC displays constituting embodiments of the invention;
Figure 32 is a cross-sectional diagram of a PALC display constituting an embodiment of the invention;
Figure 33 is a cross-sectional diagram of a PALC display constituting an embodiment of the invention;
Figure 34 illustrates a method of attaching an internal polariser to a thin dielectric;
Figure 35 illustrates removal of a support of the polariser of Figure 34;
Figure 36 is a cross-sectional diagram of a known display; and
Figure 37 is a cross-sectional diagram of a display constituting an embodiment of the invention.

Like reference numerals refer to like parts throughout the drawings.

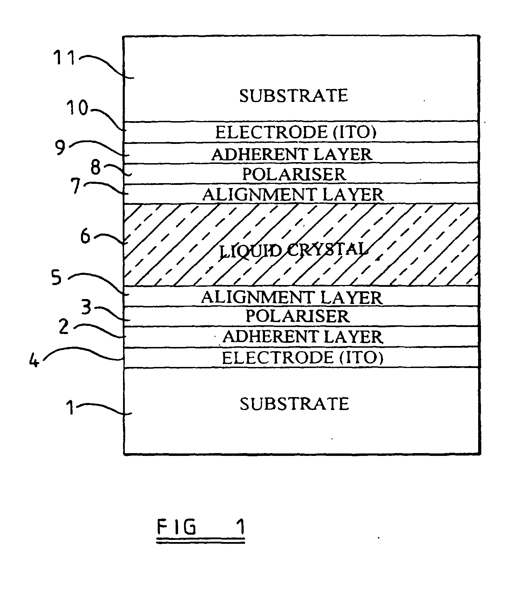

The liquid crystal SLM shown in Figure 1 comprises first and second cell walls with the liquid crystal disposed therebetween. The first cell wall comprises a substrate 1, for instance of polished soda-lime glass, which is coated with a transparent electrode 4, for instance of ITO, having resistivity of less than 20 ohms per square. An adherent layer 2 is formed on the electrode 1 and may comprise an epoxy based system. For instance, the adherent layer may be formed of the commercially available epoxy adhesive Epotek 301 diluted in butoxyethanol in the ratio 1:3 by weight which is spun in an open bowl spin coater at 4,000rpm for 30 seconds.

A polariser 3 is formed on the adherent layer 2 and comprises a stretched polyacetylene/polyvinyl alcohol copolymer, for instance of the type disclosed in US 5 049 427. After applying the polariser 3 to the adherent layer 2, the adherent layer is cured at 20°C for six hours.

A polyimide liquid crystal alignment layer 5 is formed on the polariser 3. For example, the polyimide may comprise a polyimide sold by Du Pont under the designation PI 2555 dissolved 1:20 in a solvent comprising a mixture of N-methyl-2-pyrrolidone and 1-methoxypropan-2-ol as sold by Du Pont under the designation T 9039, which is spun in an open bowl spin coater at 4,000rpm for 30 seconds. The polyimide alignment layer 5 is then cured by heating at 170°C for two hours. The alignment layer 5 is then rubbed with a soft cloth to impose a preferred direction and pre-tilt on the alignment layer.

The second cell wall comprising a substrate 11, a transparent electrode 10, an adherent layer 9, a polariser 8 and an alignment layer 7 is made in the same way as the first cell wall. Plastic spacer beads, for instance of 10 micrometre diameter, are sprayed onto the alignment layer 5 and the liquid crystal cell is assembled with the spacer beads between the alignment layers 5 and 7 and with the alignment directions of the alignment layers 5 and 7 substantially perpendicular to each other. The interior of the cell between the alignment layers 5 and 7 is sealed, for instance using an ultraviolet curable adhesive, and filled with a liquid crystal material 6, for example comprising a nematic liquid crystal containing a chiral dopant so as to produce a 90 degree twisted nematic cell.

In the SLM shown in Figure 1, the electrodes 4 and 10 are spaced further from the liquid crystal layer 6 than is usual because of the interposition of the adherent layers 2 and 9 and the polarisers 3 and 8. The drive voltages for the SLM are therefore adjusted to compensate for the dielectric effect of these additional layers.

It was found that the processing steps to form the first and second cell walls did not unacceptably degrade the performance of the polarisers 3 and 8. In particular, despite the use of elevated temperatures for prolonged periods to cure the alignment layers 5 and 7, the polarisers 3 and 8 retained satisfactory transmission and contrast ratio for commercial use of the SLM.

The method of making the first and second cell walls may be modified in various ways. For instance, the alignment layers 5 and 7 may be made of a polyimide such as that sold by Du Pont under the designation AM 4276, cured at 120°C for one hour. The use of such lower temperature curing alignment layers further reduces the degradation of the polarisers 3 and 8.

The adherent layers 2 and 9 may be made of other materials, such as commercially available polyurethane based adhesives. An example of such an adhesive is Dymax light weld 401 which may be applied to the electrodes 4 and 10 by spinning in an open bowl spin coater at 5,000rpm for thirty seconds. The polarisers 3 and 8 are applied to the adherent layers 2 and 9, which are then cured by exposure to ultraviolet light, for instance having a wavelength of 365 nanometres and a power of 50 milliwatts per square centimetre for 60 seconds.

The adherent layers 2 and 9 may also be made of a polyimide, for instance comprising PI 2555 dissolved 1:20 in T 9039 spun in an open bowl spin coater at 5,000rpm for 10 seconds. After the polarisers 3 and 8 have been formed, the polyimide adherent layers 2 and 9 are cured at 140°C for thirty minutes. An advantage of the use of such a polyimide is that it is known to be compatible with LCD fabrication and operation.

The processing conditions during making of the first and second cell walls must be such that degradation of the performance of the polarisers 3 and 8 is sufficiently small to yield devices of acceptable operation. In particular, the polarisers should preferably retain substantially achromatic transmission of at least 80% and achromatic contrast ratios of at least 100:1. The choice of materials and fabrication techniques for those layers formed after the polarisers 3 and 8 must therefore be such as not to degrade the polariser performance beyond acceptable limits for the specific application. This affects the choice of material and fabrication technique of the alignment layers 5 and 7 and any other layers (as described hereinafter) formed after the polarisers. In the case of the alignment layers, for instance, the cure temperature and duration should be such as not to cause undue damage to the polarisers. Curing should preferably take place less than 180°C for two hours and more preferably less than 150°C for two hours.

The substrates 1 and 11 may be made of low alkali glass, such as Corning 7059, typically with a thickness of 1.1 mm. An advantage of being able to form the polarisers 3 and 8 between the substrates 1 and 11 is that any birefringence occurring in the substrates does not substantially affect the performance of the SLM. This allows much greater freedom of choice of materials for the substrates 1 and 11. For instance, the substrates may be made of plastics including polyethylene terephthalate, polyethersulfone, polymethylmethacrylate, polyesters or polycarbonates. Materials which may have residual or stress induced birefringence may therefore be used whereas such materials would be unsuitable for use in SLMs of conventional type having external polarisers.

The adherent layers 2 and 9 may be made from any suitable adhesive or tacking material fulfilling the requirements of high transparency, achromaticity, thermal stability and preferably thermal expansion similar to that of the polarisers 3 and 8. Examples of suitable materials for the adherent layers are organic adhesives such as epoxy resins, acrylic polymers or those based on polyurethane derivatives. These may be applied to the underlying surface by any suitable technique such as printing, rolling, casting or spin coating to achieve a uniform thin layer. After application of the polarisers 3 and 8, such adhesives may be cured by thermal, free-radical or photochemical means. In addition to commonly available adhesives, it may be advantageous to use materials which are already used for other purposes in the fabrication of LCDs because their compatibility with such devices is already established. Suitable materials are those which are tacky on application and so provide some adhesive function, such as polyimides, polyamides and polyvinyl alcohol solution.

The polarisers 3 and 8 may be made from any suitable stretched polymer which contains conjugated double bonds and which is thermally stable. After completion of fabrication of the SLM, the polarisers preferably have a contrast ratio of at least 100:1, preferably over a range of bandwidths of 510 to 600 nanometres and more preferably over a range of 400 to 700 nanometres. The polarisers preferably have a transmission of at least 50% and more preferably at least 80% for linearly polarised light. The polarisers preferably retain or exceed these properties after exposure to at least 100°C for at least thirty minutes and more preferably to at least 180°C for at least two hours. Further, the polariser material should preferably be resistant to common process solvents such as isopropyl alcohol, acetone, n-methyl pyrrolidinone, sodium hydroxide and toluene. The polarisers 3 and 8 are preferably of uniform thickness so as not to introduce thickness variations in the liquid crystal layer 6. The polarisers are preferably thin so as to facilitate the deposition of stable transparent conducting electrodes (where these are formed on or above the polarisers), preferably less than 30 micrometres thick and more preferably less than 10 micrometres thick.

The transparent conducting electrodes 4 and 10 are preferably made from ITO applied by any process which is compatible with the temperature requirements of the polarisers when the electrodes are formed on or above the polarisers. For instance, deposition of such electrodes is preferably such that the polarisers are subjected to temperatures of less than 200°C. For example, low temperature electron beam or sputtering processes may be used to apply the electrodes 4 and 10. The electrodes preferably have a transmission of at least 90% and a resistivity of less than 100 ohms per square. Either or both electrodes 4 and 10 may be etched to provide a plurality of segmented electrodes as required, for instance to define picture elements (pixels) of the SLM.

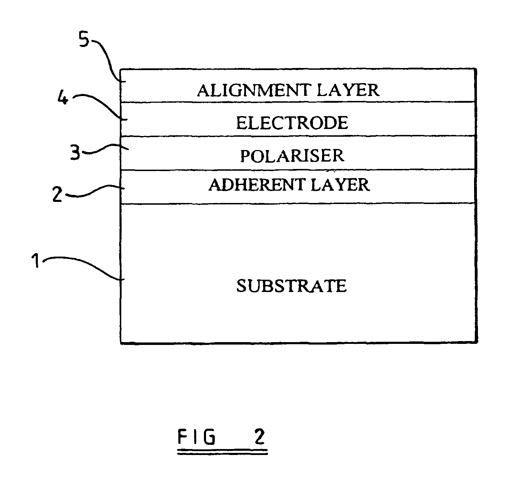

The cell wall shown in Figure 2 differs from those shown in Figure 1 in that the electrode 4 is formed between the alignment layer 5 and the polariser 3 rather than between the adherent layer 2 and the substrate 1. The layers 2, 3 and 5 are formed as described with reference to Figure 1 whereas the electrode 4 is formed by sputtering onto the polariser 3, for instance by vaporising an ITO target in a low pressure argon/oxygen atmosphere. Either or both cell walls may be formed in this way. As described hereinbefore, where the electrode 4 is formed on or above the polariser 3, the processes for forming the electrode must be such as not to degrade the performance of the polariser 3 beyond acceptable limits. However, an advantage of the arrangement shown in Figure 2 compared with that shown in Figure 1 is that there are fewer dielectric layers between the electrode 4 and the liquid crystal 6. Accordingly, conventional drive voltages may be used without having to take account of additional dielectric layers.

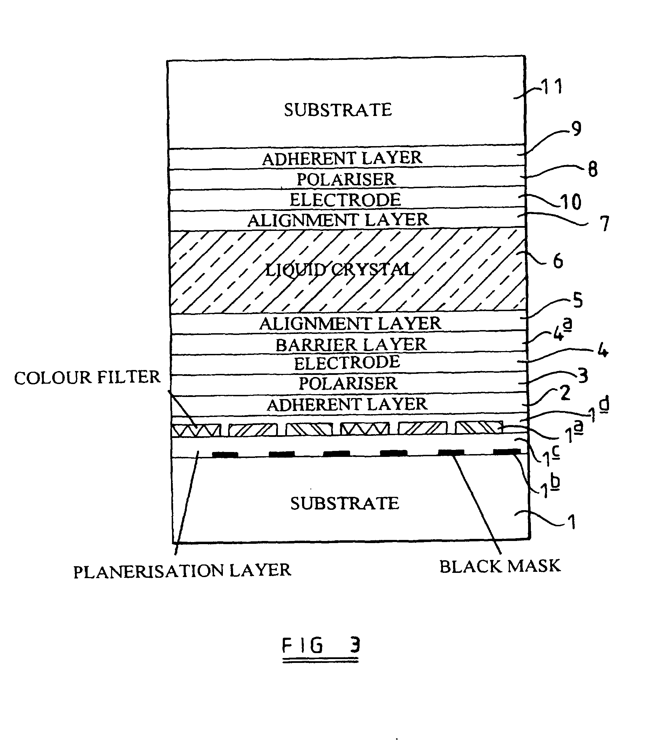

Figure 3 illustrates an SLM including a colour filter arrangement. A black mask 1b for obscuring regions of the SLM which are required not to be visible is formed on the substrate 1 and a planarisation layer 1c is formed above the black mask 1b to provide a plane surface for further processing. Colour filters 1a, such as red, green and blue pixel colour filters, in an appropriate arrangement are formed on the planarisation layer 1c and a further planarisation layer 1d is formed on the colour filters 1a. The colour filter arrangement may, for instance, be formed as disclosed in "Progress in Colour Filters for LCDs", Toppan Printing Company, SID 94 Digest page 103.

The first and second cell walls are then formed as described hereinbefore. However, Figure 3 illustrates an additional barrier layer 4a which may be formed on the electrode 4 so as to help prevent short circuits across the liquid crystal layer 6.

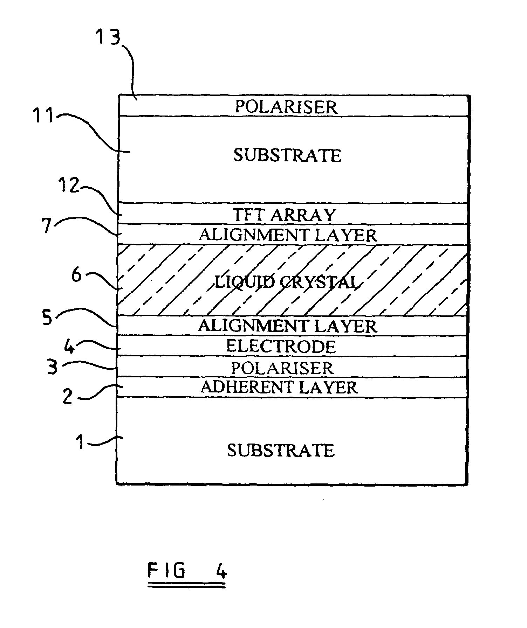

The SLM shown in Figure 4 has a first cell wall of the type shown in Figure 2 and a second wall which differs from those shown in Figures 1 to 3 in that the internal polariser 8 is omitted and an external polariser 13 is provided. Further, a thin film transistor (TFT) array 12 is formed between the substrate 11 and the alignment layer 7 and also provides the electrodes in place of the electrode 10. The TFT array 12 may be of a known type for providing an active LCD. This arrangement has the advantage of not requiring the introduction of extra processing steps to the TFT array 12, which extra steps might otherwise reduce the yield. Further, because the polariser 13 is disposed outside the cell, it may be of a conventional type such as iodine doped stretched polyvinyl alcohol. The second cell wall shown in Figure 4 may be used with other first cell wall arrangements, for instance as illustrated in Figures 1 and 3 or in the embodiments described hereinafter.

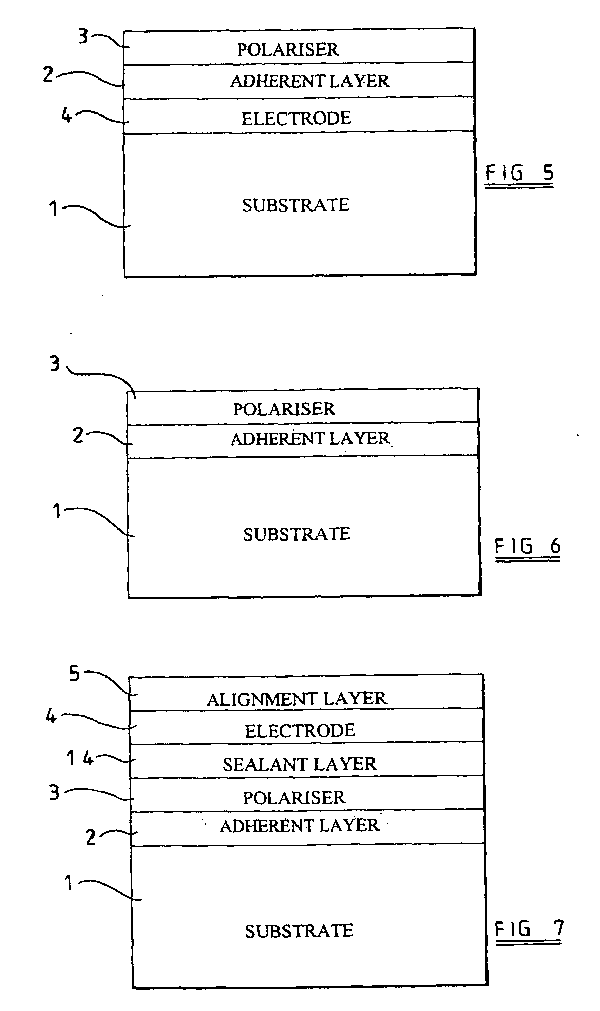

The cell wall shown in Figure 5 differs from those described hereinbefore in that the alignment layer 5 is omitted. Such an arrangement may be used with electrooptic effects which do not require specific alignment layers, such as the axially symmetric mode. Alternatively, the polariser 3 may provide an aligning effect, for instance when it comprises polyacetylene which may be used to act as a low pre-tilt alignment surface. Such an arrangement may be advantageous if the opposite alignment layer 7 provides a high pre-tilt.

The cell wall illustrated in Figure 6 differs from that illustrated in Figure 5 in that the electrode 4 is omitted. In this arrangement, the electrode function is provided by the intrinsic conductivity of the material, such as polyacetylene, forming the polariser 3. The conductivity may be enhanced, for example by doping with arsenic pentafluoride.

As shown in Figure 7, a sealant layer 14 may be formed on the polariser 3 so as to help in protecting the polariser during heat treatments in the fabrication of the cell wall. The layer 14 may also be used to improve the optical performance, particularly at short wavelengths.

The alignment layers 5 and 7 may be of any material suitable for providing the desired alignment of the liquid crystal 6. For instance, rubbed polyimide as described hereinbefore or silicon oxide may be used depending on the requirement of the liquid crystal effect for pre-tilt, homeotropic or planar alignment. Because the alignment layers are in direct contact with the liquid crystal layer, suitable materials are selected to prevent contamination, particularly conductive contamination of the liquid crystal. Such contamination is particularly disadvantageous in TFT displays where the resulting conductive leakage can produce undesirable flicker. As described hereinbefore, the alignment layers 5 and 7 may have different alignment directions so as to impose a twist on the liquid crystal director, such arrangements may be used to provide twisted nematic (TN) or super twisted nematic (STN) devices. However, other alignments and types of devices may be formed using the techniques disclosed herein. Also, the separation of the first and second cell walls may be selected as appropriate for the type of device and is typically between 1 and 10 micrometres. Also, the plastic bead spacers for defining and maintaining the separation of the alignment layers may be replaced by any other suitable means, such interpixel polymer walls.

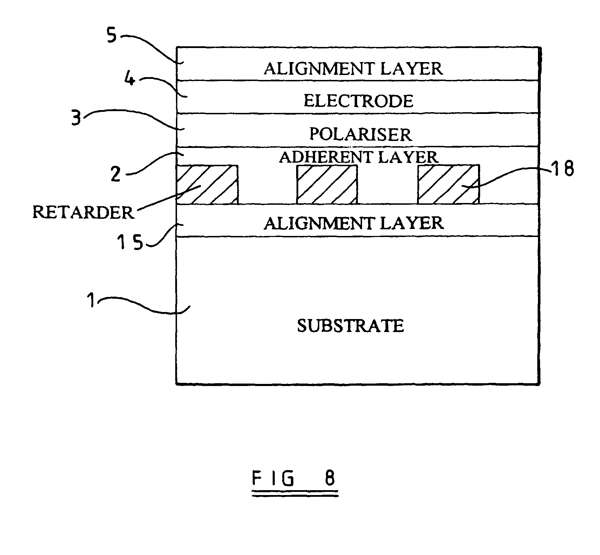

Figure 8 illustrates a cell wall of an SLM which is particularly useful for 3D displays of the type disclosed in EP 0 721 132 and GB 2 296 099. The cell wall incorporates a patterned optical retarder which is therefore internal to the substrates. The patterned retarder may be made of any material which is suitable for its location inside the cell and which is capable of withstanding the processes during manufacture. The arrangement shown in Figure 8 comprises an alignment layer 15 disposed on the substrate 1 and a birefringent material forming the retarder 18 with the retarder axis being fixed by the alignment layer.

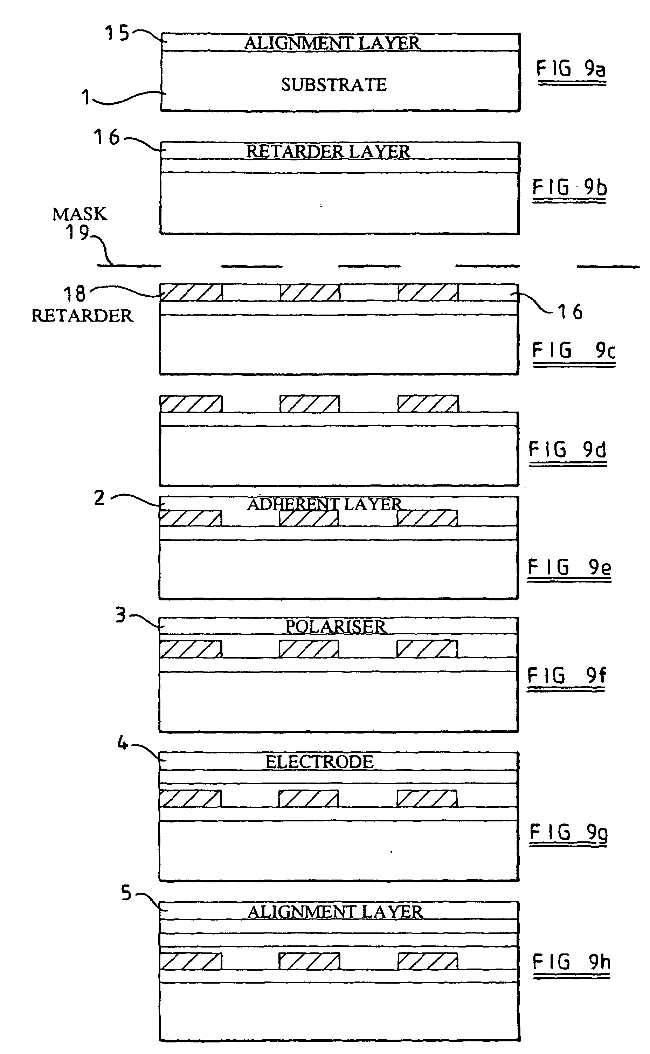

Figure 9 illustrates manufacture of the cell wall of Figure 8. In Figure 9a, the alignment layer 15 is applied to the substrate 1. The alignment layer 15 may be of the same type as described hereinbefore and may be formed in the same way. Figure 9b shows the application of an optical retarder layer 16 whose alignment direction is determined by the alignment layer 15. The retarder layer 16 comprises any suitable birefringent material which may be aligned and subsequently fixed in a predetermined direction. A suitable material comprises a liquid crystal polymer or a reactive mesogen. An example of a suitable reactive mesogen is that known as RM 257 available from Merck, UK having a high birefringence which allows the use of relatively thin layers.

As shown in Figure 9c, regions of the retarder layer 16 are exposed to ultraviolet radiation through a mask 19 so as to be photopolymerised. As shown in Figure 9d, the unpolymerised regions are then removed, for instance by an etching process, to reveal the desired patterned optical retarder arrangement. Figures 9e to 9h then show the applications of the adherent layer 2, the polariser 3, the electrode 4, and the alignment layer 5, which processes are as described hereinbefore.

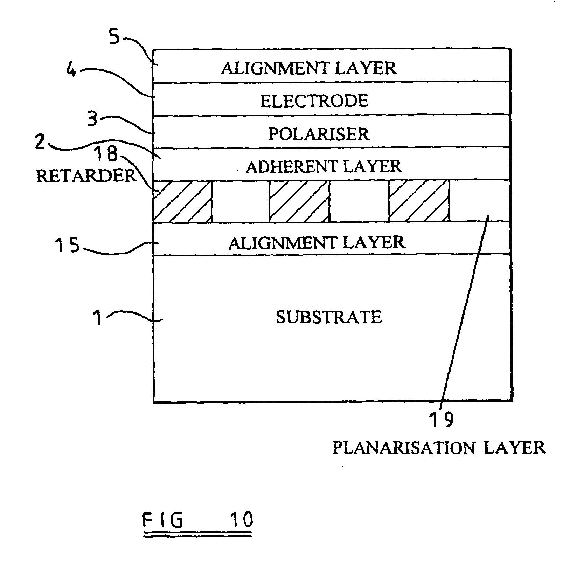

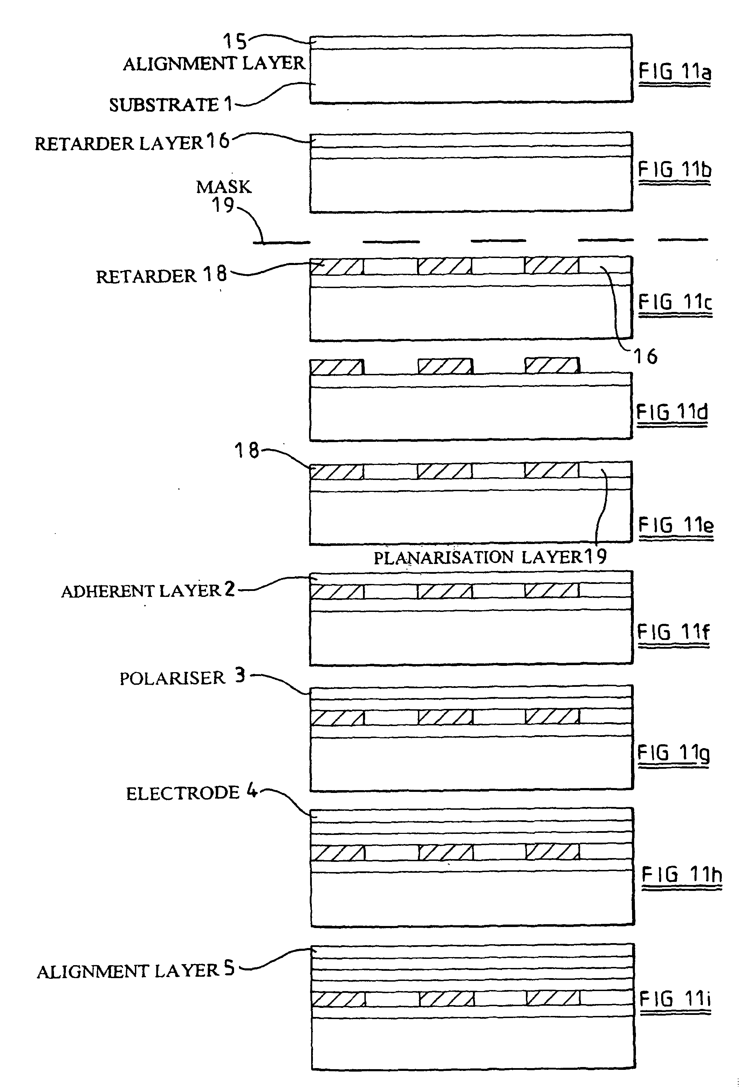

The cell wall shown in Figure 10 differs from that shown in Figure 8 in that the patterned retarder is planarised by means of a planarisation layer 19 before the adherent layer 2 is applied. The planarisation layer 19 fills the gaps left by the removed unpolymerised retarder material and the additional step during manufacture of the cell wall is illustrated in Figure 11e. The other parts of Figure 11 are as described with reference to Figure 9. The material of the planarisation layer is preferably isotropic, transparent and substantially similar in thickness to the retarders 18. Suitable materials include acrylic and epoxy resins.

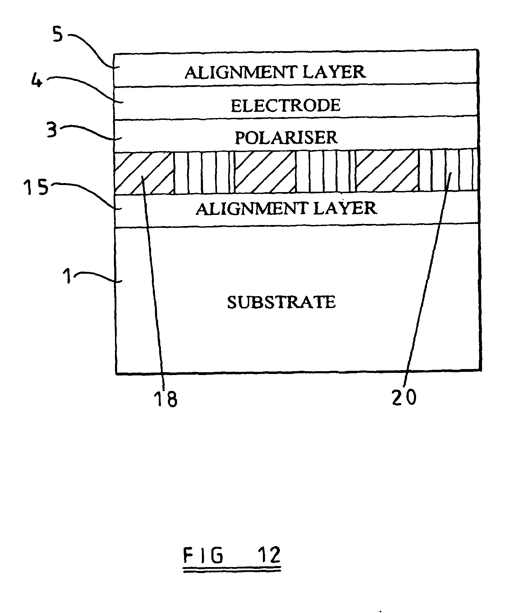

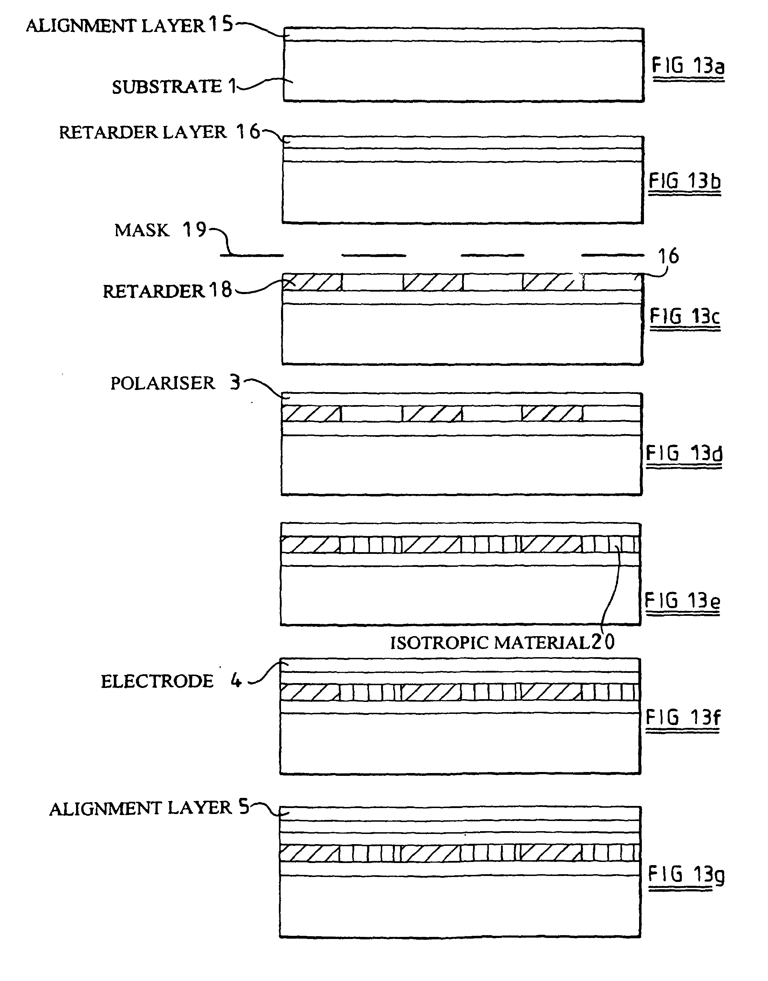

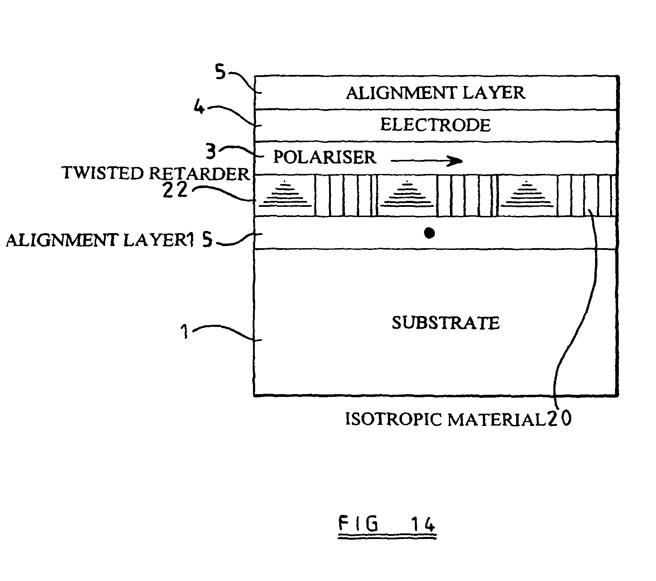

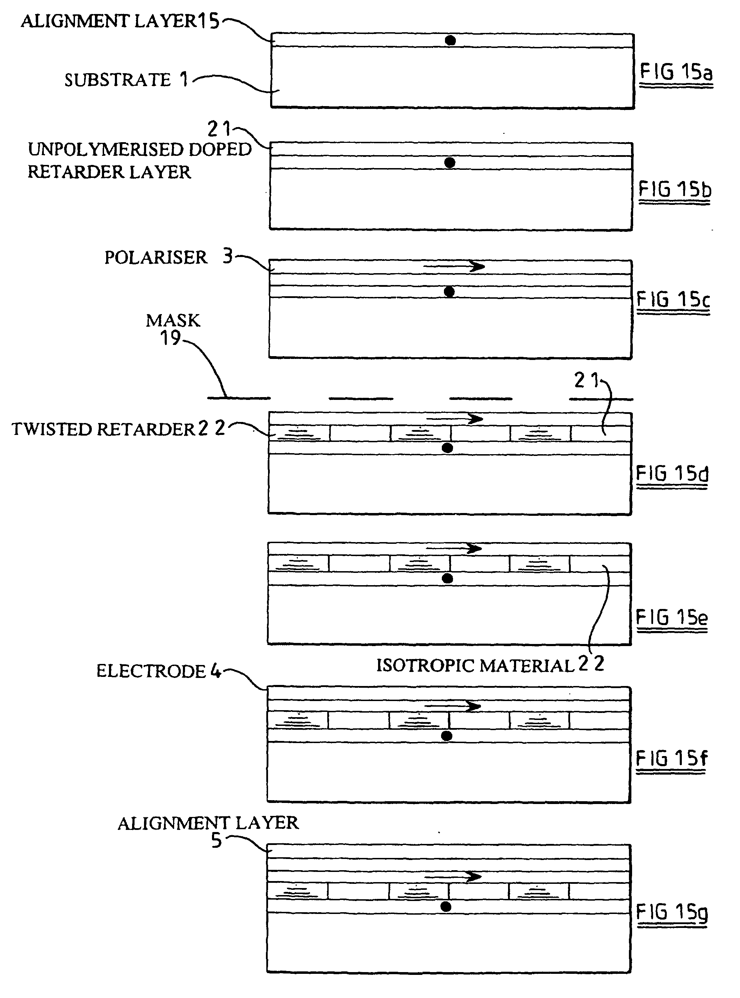

The cell wall shown in Figure 12 and the method of making it illustrated in Figure 13 differ from those illustrated in Figures 8 and 9 in that, after the selective photopolymerisation shown in Figure 9c, the unpolymerised retarder material 16 is not removed. Further, the adherent layer 2 is omitted and, instead, the polariser 3 is formed on the retarder layer 16. The unpolymerised retarder material is still tacky so that the polariser adheres to it. The workpiece is then heated to a temperature above the isotropic transition point of the unpolymerised retarder material, which is cured in an isotropic state by exposure to long wavelength ultraviolet radiation. This results in a layer having regions of isotropic material 20 and birefringent material 18 as illustrated in Figure 13e. It is also possible to add an extra amount of unpolymerised material after the selective polymerisation. Such a layer covers the previously polymerised regions as well as the unpolymerised regions and so attaches the polariser more firmly. The extra material is polymerised in the isotropic state as described hereinbefore and has no optical effect on the previously selectively polymerised regions. Otherwise, the method of making the cell wall is as described hereinbefore with reference to Figure 9.
The cell wall and method of making it illustrated in Figures 14 and 15 differ from those illustrated in Figures 12 and 13 in that a chiral dopant is added to the reactive mesogen mixture before application as the retarder layer 21. The chiral dopant introduces a continuous rotation of the retarder direction on passing through the layer so as to provide a guiding twisted retarder. The polariser 3 is applied to the unpolymerised doped retarder layer 21 before selective photopolymerisation is performed as shown in Figure 15d. The absorption direction of the polariser 3 is substantially perpendicular to the alignment direction of the alignment layer 15 as illustrated by the arrow and dot, respectively, in Figures 15a to 15g. The polariser 3 aligns the top surface of the doped retarder 21 so as to ensure that a desired twist angle is achieved without requiring the very precise layer thickness control which would otherwise be necessary. The manufacturing steps illustrated in Figure 15e, f and g are the same as those described with reference to Figures 13e, f and g, respectively.

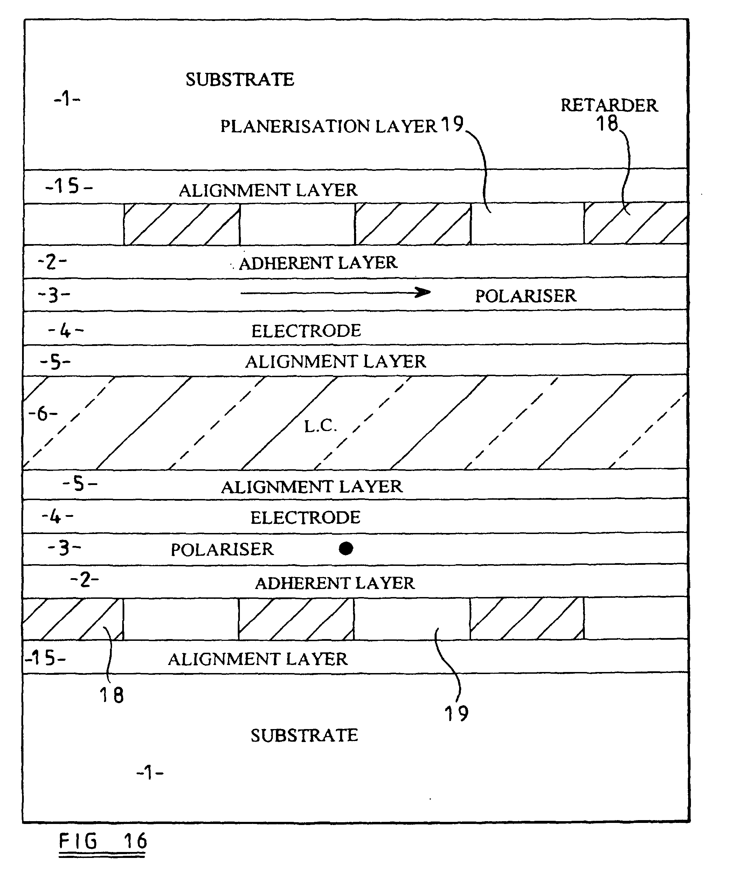

Figure 16 illustrates an SLM in which the first and second cell walls are of the type illustrated in Figure 14. Thus, both cell walls include patterned optical retarders and the cell walls are arranged such that the polarising directions of the polarisers 3 are orthogonal. Such an SLM is particularly suitable for use in a 3D display of the type disclosed in EP 0 721 132 and GB 2 296 099.

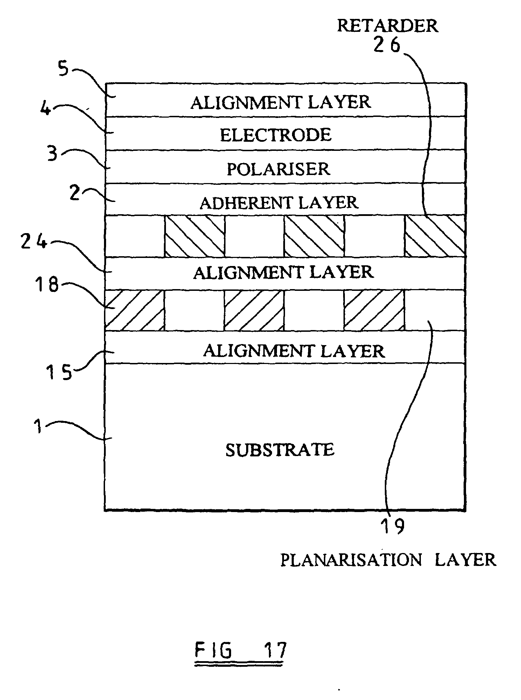

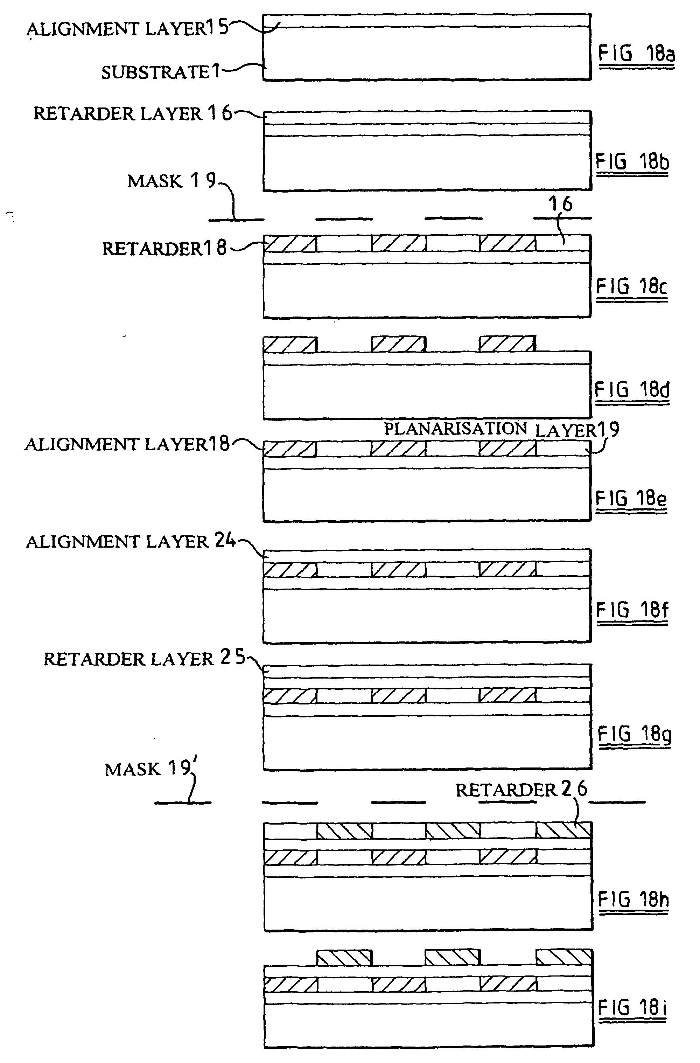

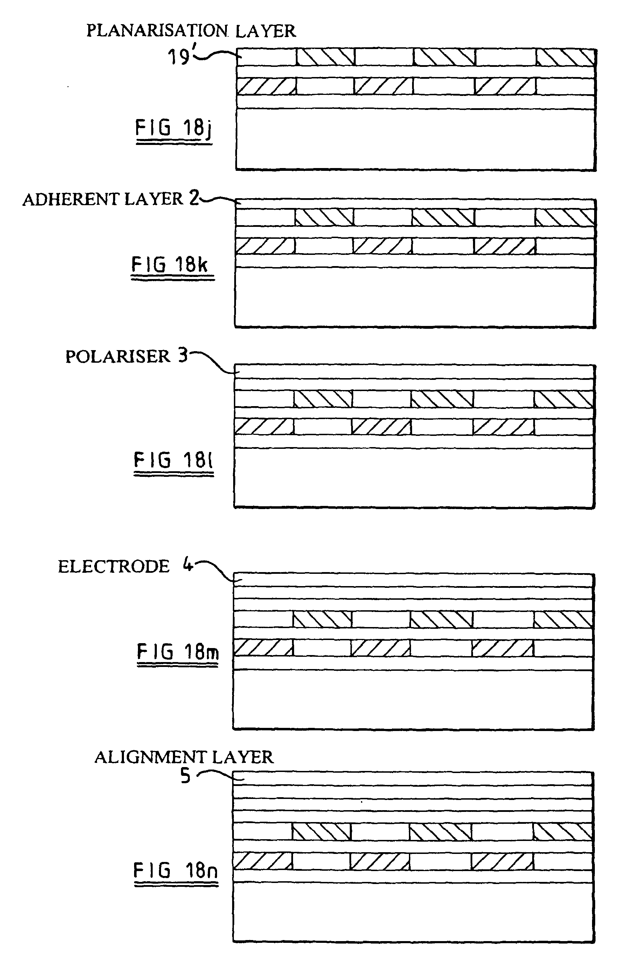

Figures 17 and 18 illustrate a cell wall and a method of making it which differ from those illustrated in Figures 10 and 11, respectively, in that a further patterned retarder 26 is formed within the cell. After the planarisation layer 19 is applied as shown in Figure 18e, another alignment layer 24, for instance of the same type as the alignment layer 15, is applied, for instance in the same way. The alignment layer 24 is applied with an alignment direction different from that of the alignment layer 15. A further retarder layer 25, for instance of the same type as the retarder layer 16 is formed, for instance in the same way, on the alignment layer 24. The layer 25 is selectively exposed to ultraviolet radiation through a mask 19' so that regions 26 forming the further patterned optical retarder are photopolymerised. The unpolymerised regions are then removed as illustrated in Figure 18i and a further planarisation layer 19' is formed. The subsequent steps of forming the layers 2, 3, 4 and 5 are then as described hereinbefore.

By using this technique, it is possible to provide alternate areas of retarders aligned in different directions. For instance, the retarders 18 and 26 may be aligned to act as +λ/4 and -λ/4 waveplates or as +λ/2 and -λ/2 waveplates. SLMs using cell walls of this type are suitable for use in 3D displays, for instance as disclosed in EP 0 721 132 and GB 2 296 099.

By repeating the process steps illustrated in Figures 18b to 18e, multiple stacked layers of patterned retarders may be fabricated.

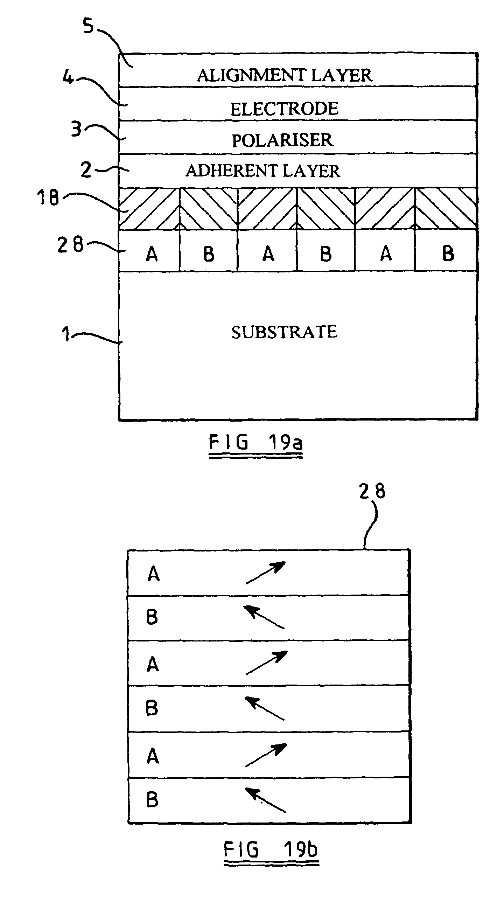

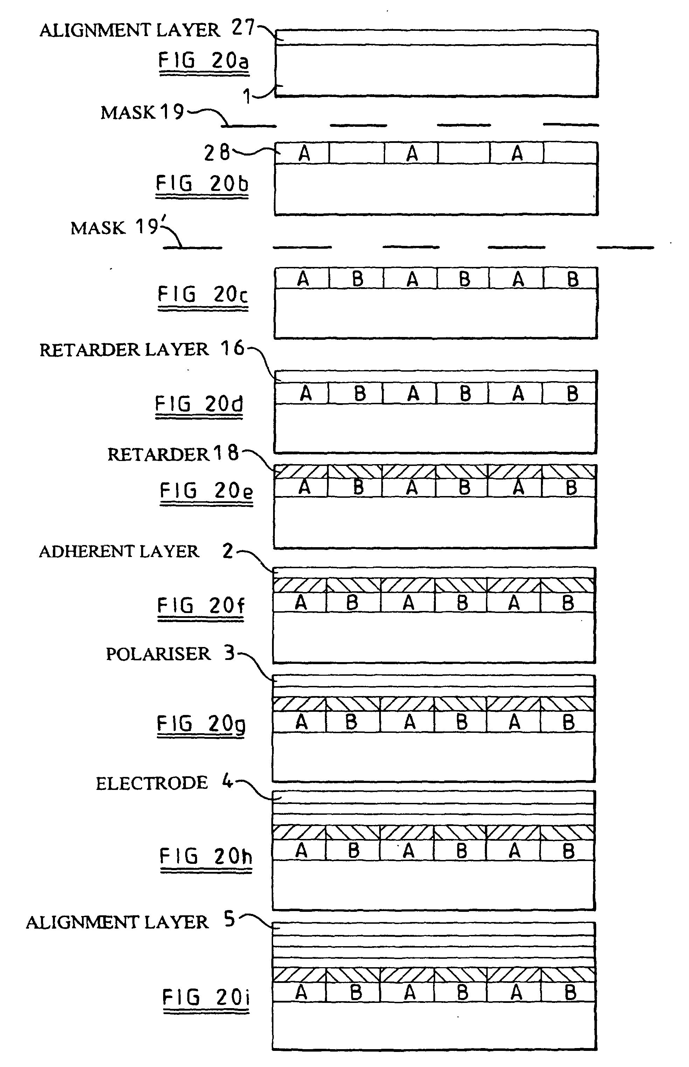

Figure 19a and 19b show another cell wall and Figure 20 illustrates another method of making it, both of which differ from those shown in Figures 10 and 11, respectively, in that the standard alignment layer 15 is replaced by a layer of linearly photopolymerisable material 27, for instance of the type described in "Surface Induced Parallel Alignment of Liquid Crystals by Linearly Polymerised Photopolymers, Schadt et al, Japanese Journal of Applied Physics, volume 31 (1992), page 2155 and EP 0 689 084. The layer is selectively exposed to radiation of a first linear polarisation through a mask 19 as shown in Figure 20b to form exposed regions A. The unexposed regions B are then exposed via a mask 19' to radiation having a different linear polarisation. Thus, alternate regions of the alignment layer 28 provide different alignment directions, for example different by 45 or 90 degrees. Figure 19b illustrates this in a plan view of the layer 28. The retarder layer 16 is then applied as shown in Figure 20d as described hereinbefore. However, the retarder adopts the alternate directions imposed by the underlying part of the alignment layer 28 and so does not require selective photopolymerisation. Instead, the retarder layer 16 may be cured by exposure to a uniform ultraviolet source. The retarder regions may thus be arranged to act as +λ/4 and -λ/4 waveplates or as +λ/2 and -λ/2 waveplates and an SLM using such cell walls is suitable for use in 3D displays, for instance as disclosed in EP 0 721 132 and GB 2 296 099.

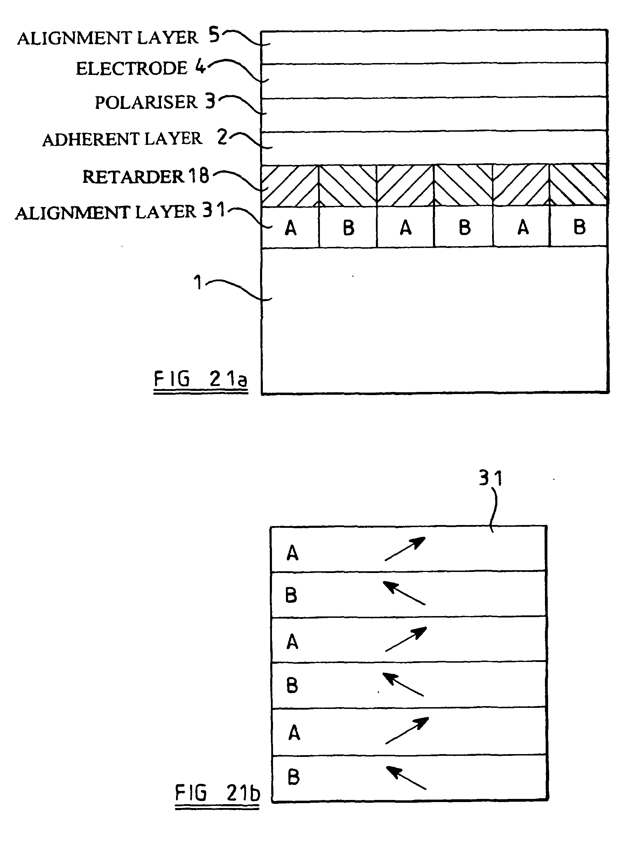

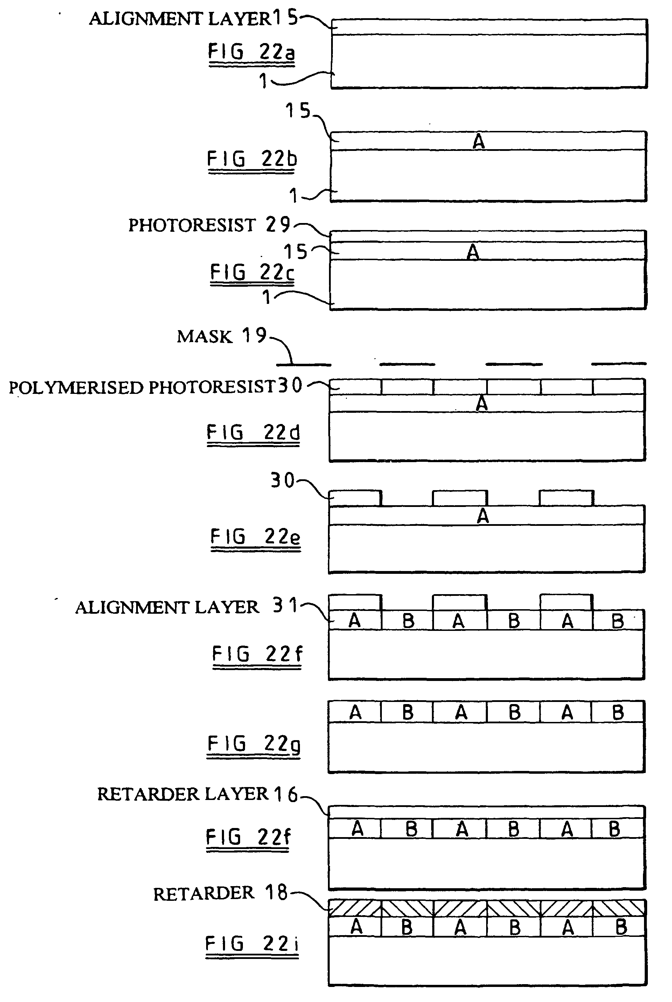

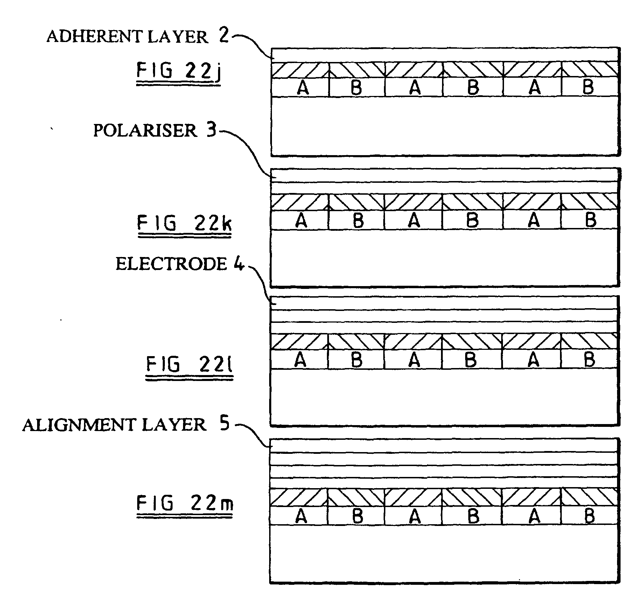

Figures 21a and 21b show another cell wall and Figure 22 illustrates another method of making it, both of which differ from those shown in Figures 10 and 11, in that the alignment layer 15 is rubbed twice. It is first rubbed in the direction A. Photoresist material 29 is applied and selectively polymerised through a mask 19 as shown in Figure 22d. This may be done using known photolithographic techniques. The unpolymerised material is removed leaving the polymerised photoresist material 30 and regions of the underlying alignment layer 15 exposed. The assembly is then rubbed in a second direction B to produce an alignment layer with a spatially varying alignment direction 31. The polymerised photoresist material is then removed. The retarder layer 16 is then applied as shown in Figure 22h as described hereinbefore. However, the retarder adopts the alternate directions imposed by the underlying part of the alignment layer 31 and so does not require selective photopolymerisation. Instead the retarder layer 16 may be cured by exposure to a uniform ultraviolet source. The retarder regions may thus be arranged, for example, to act as +λ/4 and -λ/4 waveplates or as +λ/2 and -λ/2 waveplates and an SLM using such cell walls is suitable for use in 3D displays, for instance as disclosed in EP 0 721 132 and GB 2 296 099.

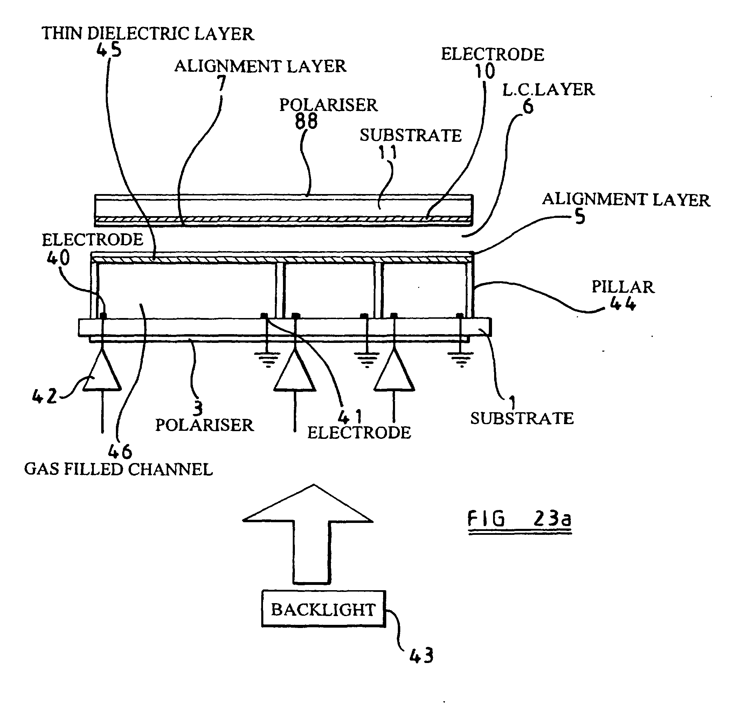

Figure 23a illustrates a known PALC display comprising a substrate 1 carrying a plasma switching arrangement in which plasma addressing electrodes 40 and 41 are fabricated by a technique known as "powder blasting in frit" (PBF). The electrodes 40 and 41 are formed on the substrate 1, which is provided with an external polariser 3. Each of the electrodes 41 is connected to a common or earth line whereas each of the electrodes 40 is connected via a buffer 42 to receive an addressing signal. A display backlight 43 is illustrated diagrammatically and illuminates the display from behind the substrate 1 and the polariser 3.

The plasma addressing arrangement further comprises elongate ribs or pillars 44 to which is attached a microsheet or thin dielectric layer 45. The pillars 44 divide the region between the substrate 1 and the dielectric layer 45 into gas filled channels 46. An alignment layer 5 is disposed on the dielectric layer 45.

The display further comprises a substrate 11 which carries electrodes 10 (typically strip electrodes oriented substantially orthogonally to the channels 46), for instance of indium tin oxide (ITO), and an alignment layer 7. The alignment layers 5 and 7 are separated, for instance by a dielectric spacer arrangement which may include spacer balls (not shown), to form a gap which contains a liquid crystal layer 6. A polariser 88 is disposed on the substrate 11.

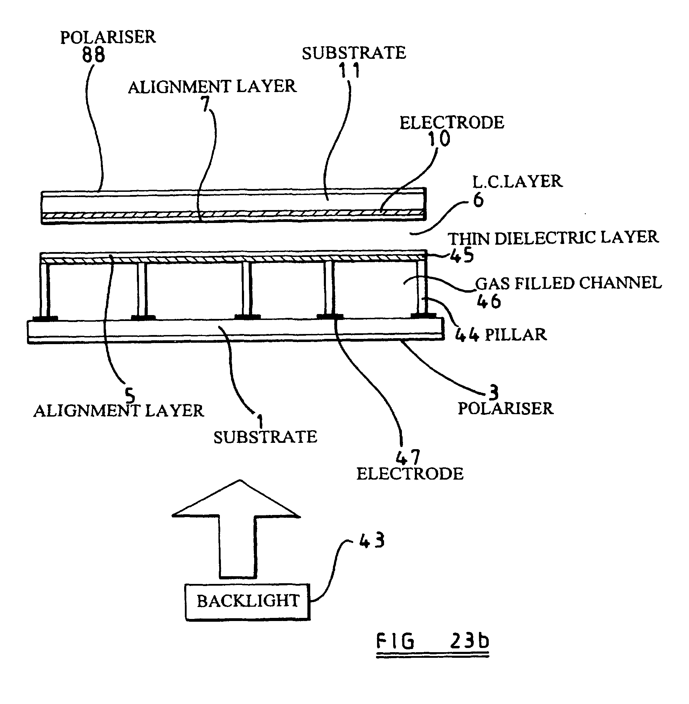

Figure 23b illustrates another known type of PALC display which differs from that shown in Figure 23a in that the pillars 44 or ribs supporting the dielectric layer 45 are formed on electrodes 47 in an arrangement which is known as "rib on electrode" (ROE).

Fabrication and operation of the displays shown in Figures 23a and 23b are known, for example as described in EP 0 742 570 and will not be described further.

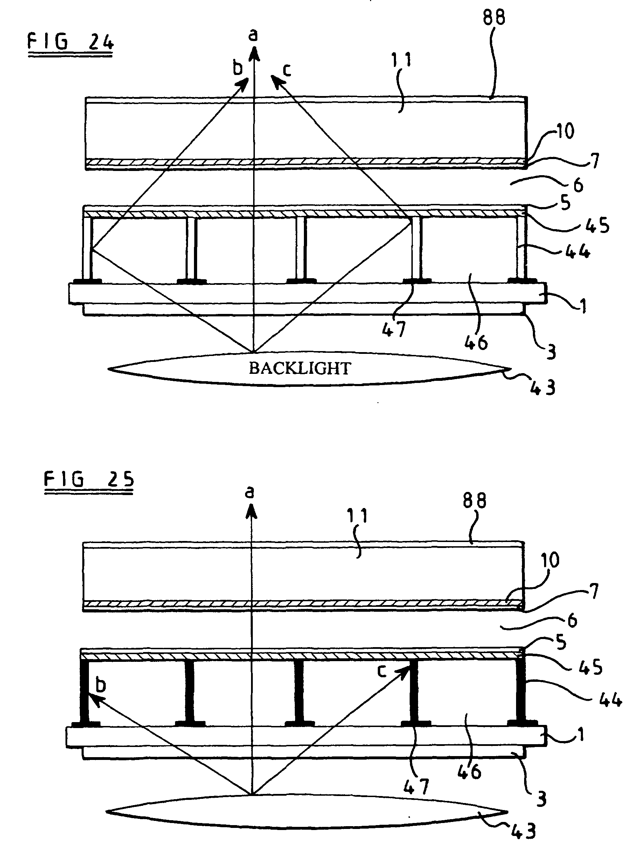

Figure 24 illustrates representative optical paths a, b and c from a typical type of backlight 43 which is not generally collimated. Although much of the light from the backlight 43 passes directly through the polariser 3 and the channels 46 without being reflected, as indicated by path a, substantial amounts of light are reflected within the display from the pillars 44 as illustrated by the light paths b and c. For the light path a, partial depolarisation may or may not take place through the gas in the channel 46. However, reflection from the pillars 44 results in substantial changes in polarisation. Any such changes in polarisation result in loss of extinction by the polariser 88 and hence in a loss of display contrast which is particularly evident when the display or a picture element (pixel) thereof is switched to black.

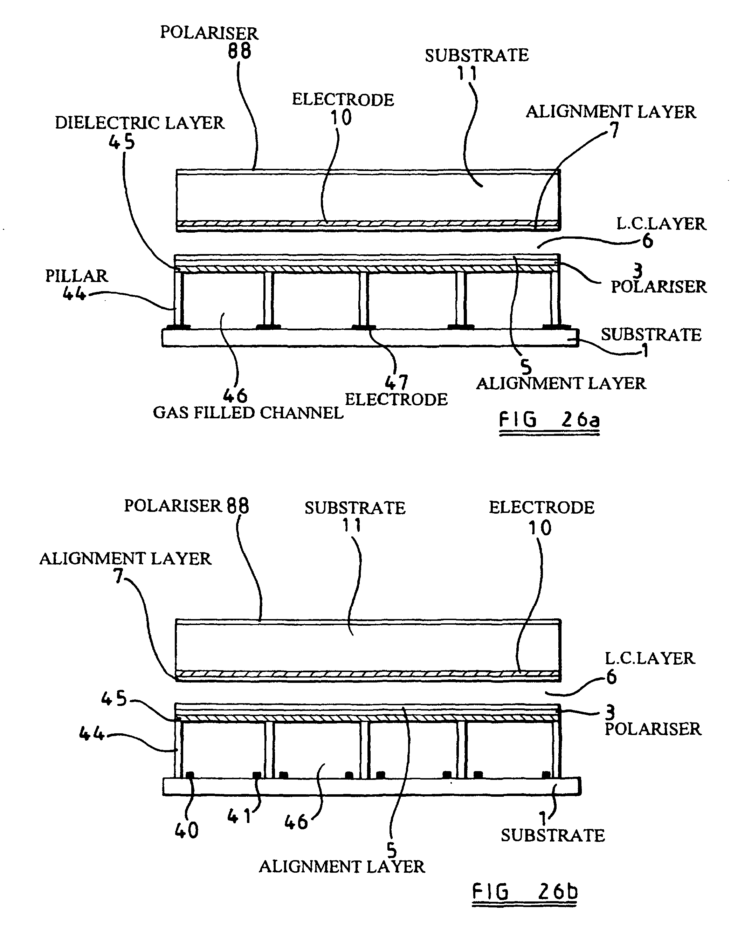

Figure 25 illustrates a technique for reducing the loss of contrast by the mechanism illustrated in Figure 24. The PALC display shown in Figure 25 has pillars 44 which are coated with a light-absorptive material so that light travelling on the light paths b and c is substantially absorbed instead of being reflected by the pillars 44. Although such an arrangement substantially reduces the loss of contrast caused by internal reflections, the light throughput of the display is substantially reduced so that display power consumption has to be increased to maintain a given level of brightness. Further, this type of display is difficult and expensive to produce. Also, the coating of the pillars 44 must endure the relatively harsh ionic environment of the gas plasma within the channels 46 without either contaminating the gas, being removed from the pillars 44, or being sputtered by material from the electrodes 47.

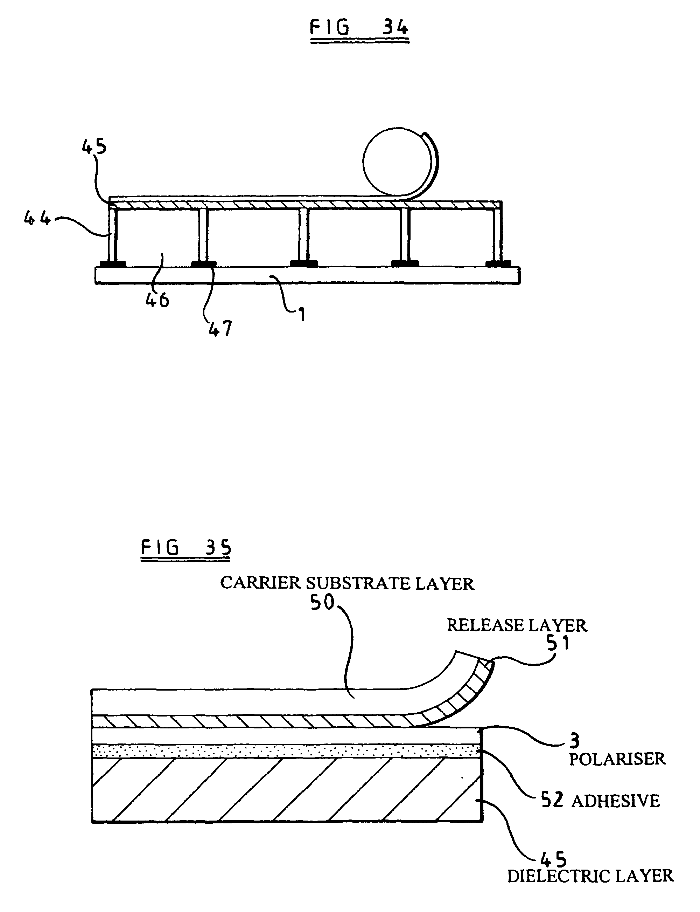

Figures 26a and 26b illustrate PALC displays of the ROE and PBF types illustrated in Figures 23b and 23a, respectively, but constituting embodiments of the invention. In particular, the displays shown in Figures 26a and 26b differ from those shown in Figures 23a and 23b in that the polariser 3 is disposed internally between the alignment layer 5 and the dielectric layer 45. The polariser 3 is made of the materials disclosed hereinbefore. The cell wall comprising the substrate 11 and associated layers may be fabricated by known techniques. The substrate 1 and plasma switching arrangement 41 to 47 may be formed using the known techniques. The polariser may be formed on the dielectric layer 45 as described herein and as illustrated in Figure 34 and the alignment layer 5 may be formed on the polariser 3 using conventional techniques such as spin-coating and curing, for instance at elevated temperatures.

The location of the polariser 3 internally of the display eliminates any possible depolarising and loss of contrast effects as described hereinbefore. In particular, the polariser 3 is optically adjacent the liquid crystal layer 6 so that no substantial depolarisation takes place. The contrast ratio is therefore not substantially affected and, in particular, a good black state can be achieved with a conventional (ie. non-collimated) backlight. The expense and difficulty of coating the pillars 44 with light-absorptive material is avoided and depolarisation (if any) through the channels 46 is no longer of consequence to the operation of the display. The polariser 3 analyses light reflected from the (non-absorptive) pillars 44 so that the light efficiency is also improved. Formation of the alignment layer 5 does not degrade the polarising properties of the polariser 3 sufficiently to result in an unacceptable optical performance.

As is known, the dielectric layer 45 is electrically in series with the liquid crystal pixel capacitance. In order to minimise loss of drive voltage, the layer 45 is typically made of glass with a thickness of approximately 30 micrometres. The internal polariser 3 adds a further series capacitance which reduces the voltage drop across the pixel capacitance. Accordingly, the thickness of the polariser 3 should be a minimum and is preferably less than 25 micrometres and more preferably equal to or less than 7 micrometres. For the same reason, it is preferable to increase the dielectric constant of the polariser 3 but this is influenced by the stretch ratio of the polariser material which also affects its optical properties.

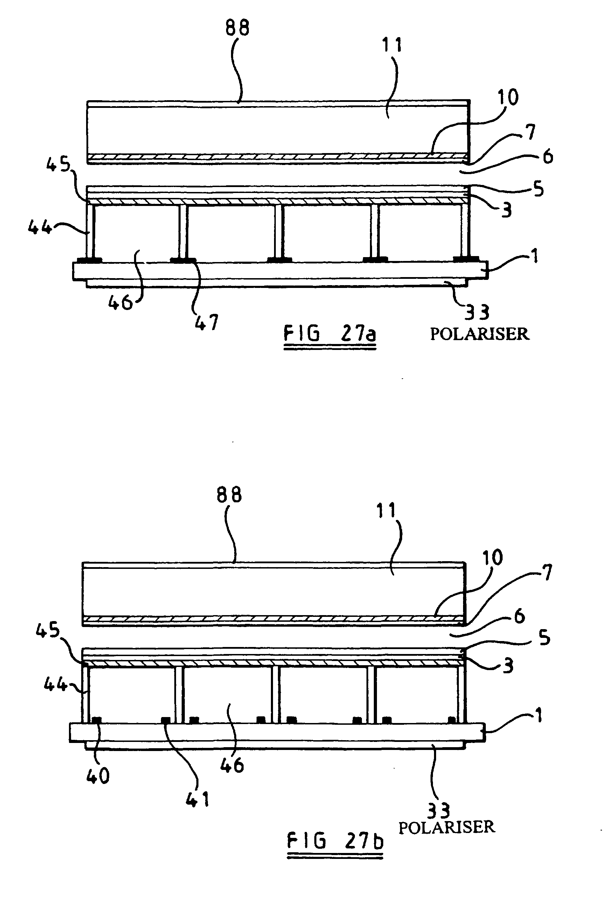

Figures 27a and 27b illustrate displays which differ from those shown in Figures 26a and 26b, respectively, in that the internal polariser 3 is augmented by an external polariser 33 disposed on the outer surface of the substrate 1. In this arrangement, the internal polariser functions as a "clean-up" polariser. The extinction properties of the internal polariser 3 can be lower than for the displays of Figures 26a and 26b while providing the same contrast performance because much of the light impinging on the internal polariser 3 is already polarised by the external polariser 33. The properties of the internal polariser 3 in this configuration may be optimised for high transmission.

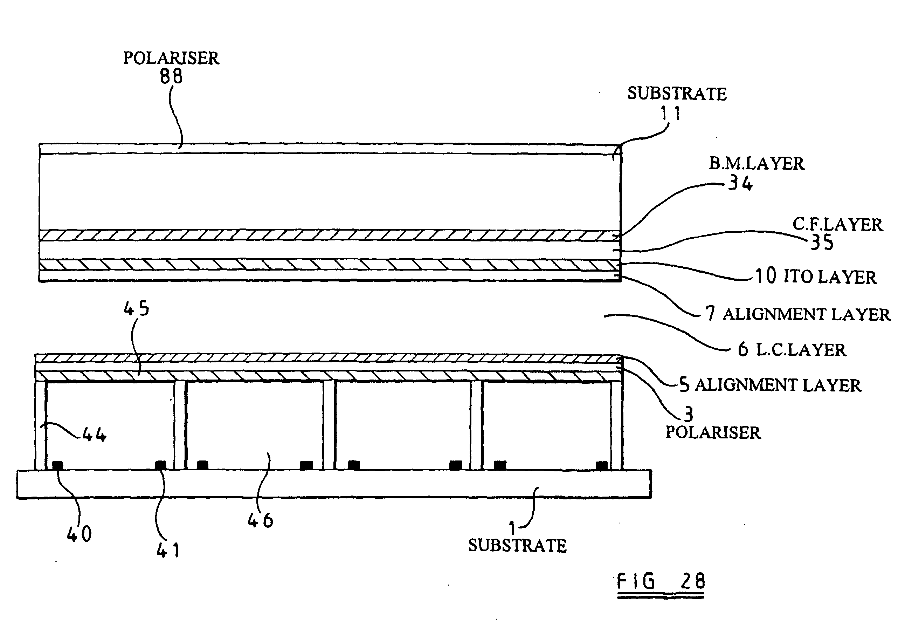

Figure 28 illustrates the construction of a PALC display in more detail. In addition to the elements described hereinbefore, the upper substrate 11 carries a black matrix (BM) layer 34 on which is formed a colour filter (CF) layer 35. The layer 35 carries the ITO layer or electrode 10 which, in turn, carries the alignment layer 7. An optical planarisation layer may be provided, for instance as part of the colour filter layer 35. The alignment layer 7 and the alignment layer 5 may, for example, comprise rubbed polyimide. The properties of the polariser 33 may be provided by the light source, which may be of the pre-polarised or polarisation recirculating type.

In cases where the liquid crystal is in the positive axially symmetric mode (ASM), the alignment layers 5 and 7 may not be required. When the negative ASM is used, the layers 5 and 7 may be of the type which produces a substantially homeotropic alignment.

It is also possible to use dyed liquid crystal polymers as the internal polariser 3, for instance as described in EP0 397 263. Such materials generally have poorer polarising efficiency than polyacetylene materials and are more suited to displays of the type shown in Figures 27a and 27b in association with an external polariser 33.

It is possible to operate the displays of Figures 26 and 27 with the backlight on the substrate 11.

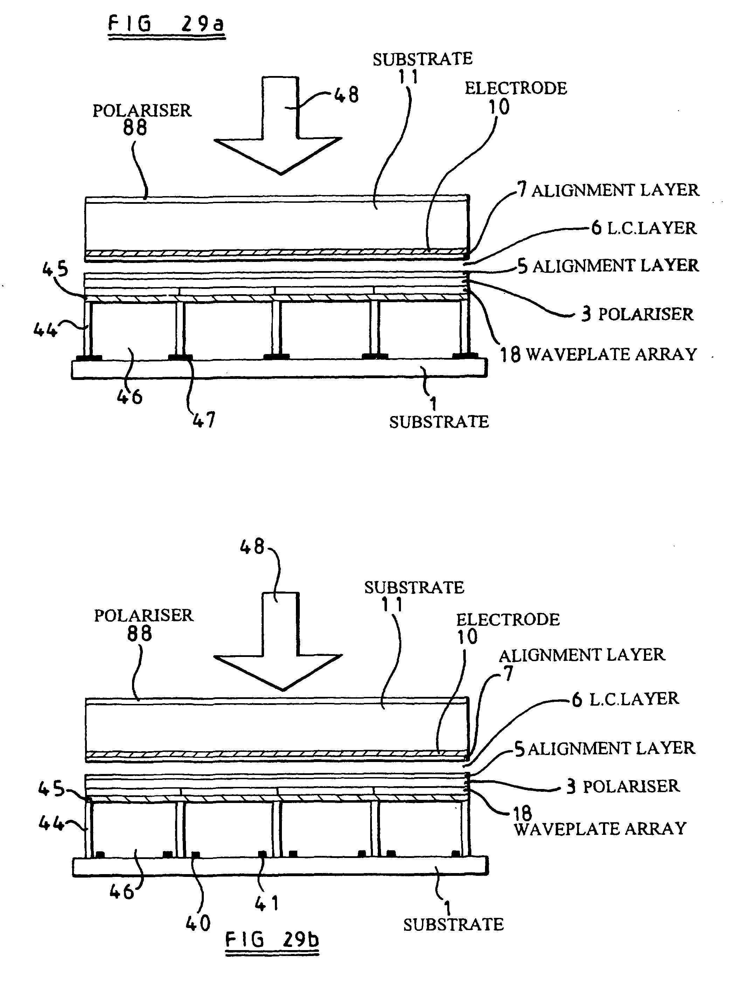

Figures 29a and 29b illustrate displays which differ from those shown in Figures 26a and 26b, respectively, in that the polarisers 3 are associated with waveplate arrays 18. Such waveplate arrays 18 and their methods of fabrication are described hereinbefore. Displays of this type may be used as stereoscopic or autostereoscopic displays as disclosed in GB 2 296 151 and EP 0 721 132. For stereoscopic viewing, the displays are illuminated from above as illustrated diagrammatically at 38 and viewed from below as illustrated in Figure 29.

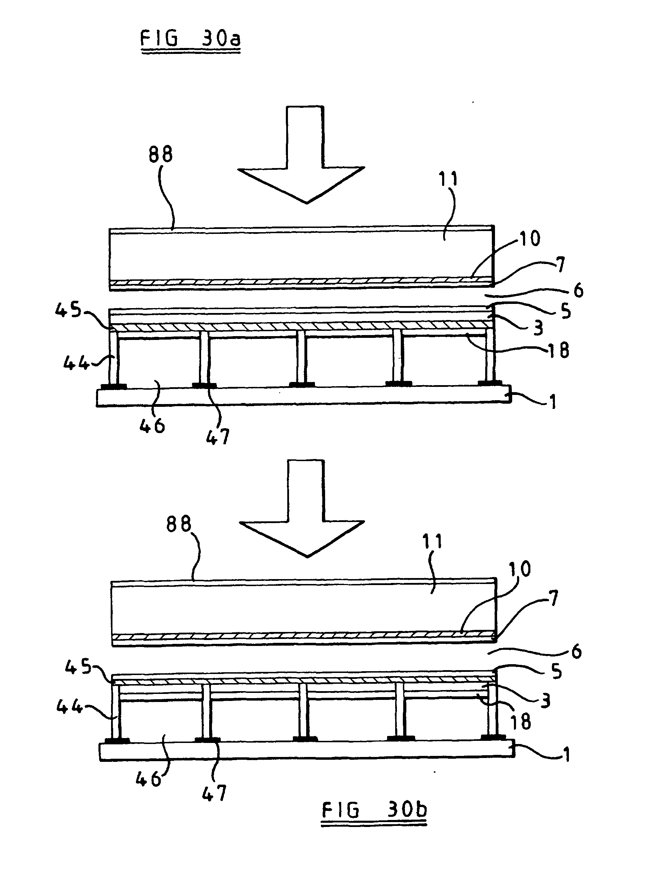

Figure 30a illustrates a display which differs from that shown in Figure 29a in that the waveplate array 18 is disposed within the channels 46. Figure 30b shows a display which differs from that shown in Figure 30a in that the polariser 3 is also disposed within the channels 46. The waveplate array is made of a material which does not contaminate the gas within the channels 46 and which is not damaged thereby.

The waveplate array 18 in the displays shown in Figure 30 may cooperate with a further waveplate or waveplate array in order to provide improved achromaticity and/or viewing angle. Such a further waveplate or waveplate array may be disposed externally of the display and may be of known type.

Figure 31a shows a PALC display of the type shown in Figure 26a in which the polariser 3 is omitted and an internal polariser 8 is disposed on the substrate 11 between the electrode 10 and the alignment layer 7. Figure 31a also shows a waveplate array 18 disposed between the polariser 8 and the electrode 10.

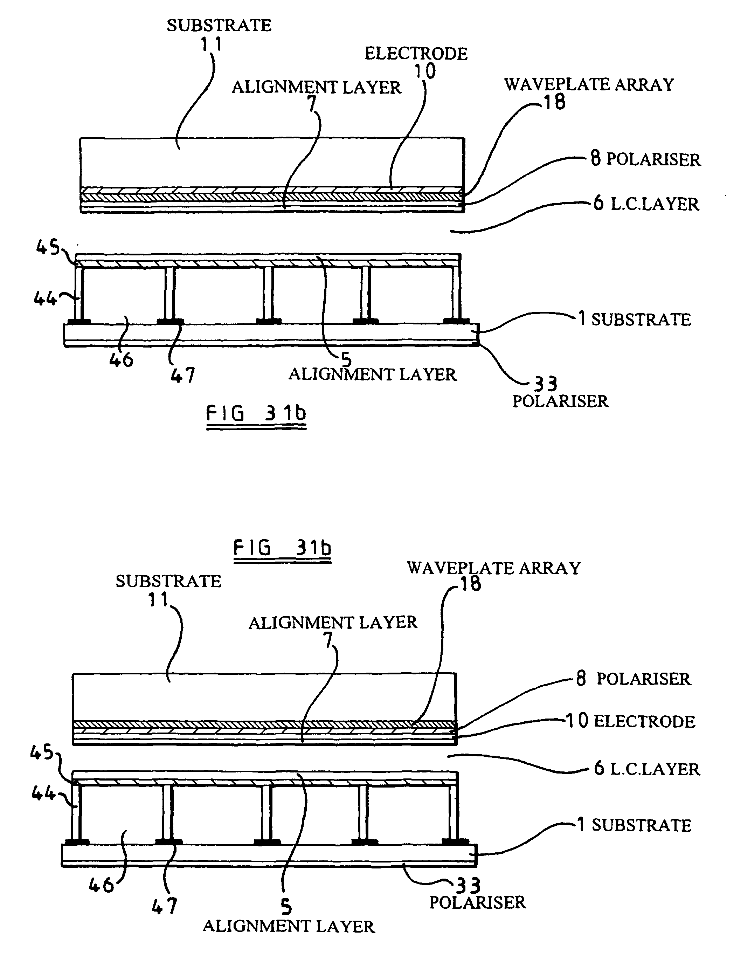

The display shown in Figure 31b differs from that shown in Figure 31a in that the waveplate array 18 is disposed between the substrate 11 and the polariser 8 and the electrode 10 is disposed between the alignment layer 7 and the polariser 8. The cell walls comprising the substrates 11 and associated layers may be fabricated as described hereinbefore. This electrode arrangement has the advantage that the series capacitance of the polariser and the waveplate are eliminated from the liquid crystal circuit so that the operating voltage is reduced.

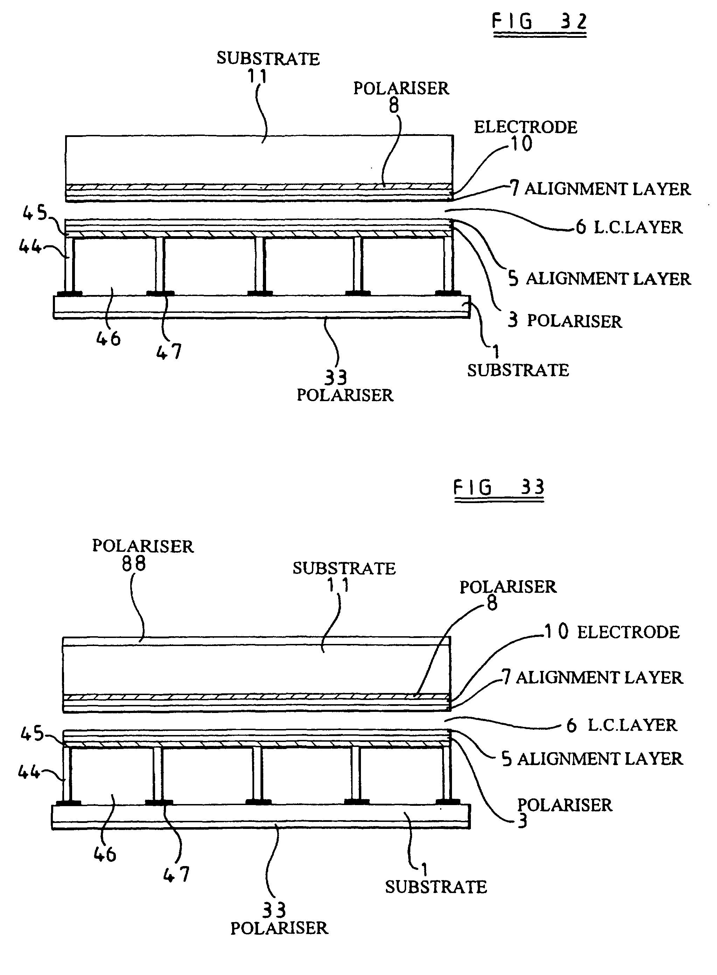

Figure 32 illustrates a PALC display which differs from that shown in Figure 26a in that the substrate 11 carries a polariser 8 disposed between the substrate 11 and the electrode 10.

The display shown in Figure 33 differs from that shown in Figure 32 in that the lower substrate 1 carries an external polariser 33 of the type shown in Figures 27a and 27b and the substrate 11 carries an external polariser 88. The polarising transmission direction of the polarisers 3 and 33 are aligned, as are the polarising transmission directions of the polarisers 8 and 88. Thus, each of the polarisers 3 and 8 acts as a "clean-up" polariser in combination with the external polarisers 33 and 88, respectively. The performance of clean-up polarisers may be as described hereinbefore.

The displays of Figures 30 to 33 may alternatively use the electrode arrangement illustrated in Figure 23 or any other known electrode arrangement.

Figures 34 and 35 illustrate a technique for attaching the polariser 3 to the dielectric layer 45. A sandwich structure comprising a carrier substrate layer 50, a release layer 51, the polariser 3, and an adhesive layer 52 is rolled onto the dielectric layer 45. The adhesive 52 may be of the contact or pressure sensitive type or may require curing. When the polariser 33 is fixed to the dielectric layer 45, the release layer 51 allows the layers 50 and 51 to be peeled away to leave the polariser 3 on the dielectric layer 45. It is thus possible to support a relatively thin polariser 3 by means of a relatively thick and robust carrier substrate layer 50, after which the layer 50 is removed so as not to affect the optical performance of the display. After attachment, the polariser and substrate may be autoclaved in order to eliminate any residual air bubbles. The polariser 3 is protected during fabrication and may therefore be relatively thin so as to reduce the effect of voltage drop across the liquid crystal pixels. The layer 50 also prevents surface damage to the polariser 3 by handling or by particle contamination.

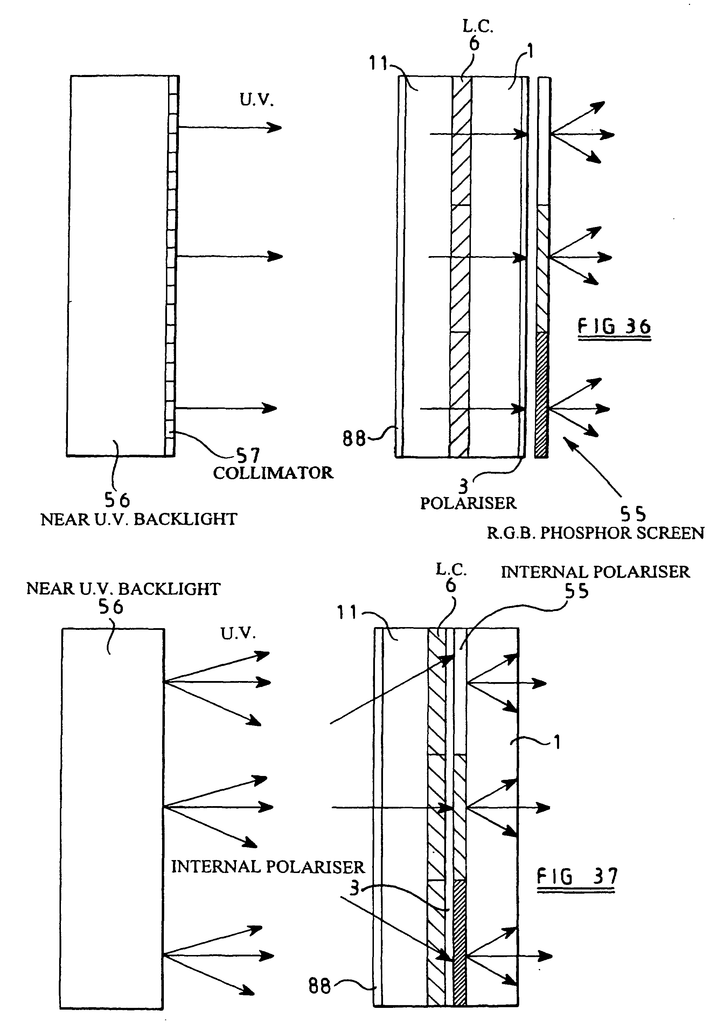

Figure 36 illustrates a display disclosed in "A first photo-luminescent LCD demonstrator", Electronic Information Displays Conference 1997. The display comprises a "near ultraviolet" backlight 56 provided with a collimater 57 for collimating the output ultraviolet radiation. The backlight 56 and the collimater 57 are disposed behind an LCD comprising substrates 1 and 11 and a liquid crystal layer 6. The LCD has external polarisers 33 and 88 and a phosphor screen 55 comprising a plurality of red, green and blue phosphor regions or dots aligned with respective pixels of the LCD.

In use, the ultraviolet radiation from the backlight is collimated by the collimater 57 and polarised by the polariser 88. The polarisation of the radiation is controlled by the pixels formed in the liquid crystal layer 6 and the resulting radiation is analysed by the polariser 33. In particular, the amount of ultraviolet radiation transmitted by each pixel is controlled by the electric field applied across the pixel. The transmitted ultraviolet radiation is then converted to visible light by the phosphor screen 55.

Because of the separation between the phosphor screen 55 and the liquid crystal layer 6, it is necessary to use a collimated backlight so as to avoid or reduce crosstalk between pixels caused by parallax.

The display shown in Figure 37 differs from that shown in Figure 36 in that the external polariser 33 is replaced by an internal polariser 3 disposed between the liquid crystal layer 6 and the substrate 1 and the phosphor screen 55 is disposed between the polariser 3 and the substrate 1. By disposing the liquid crystal layer 6, the polariser 3 and the phosphor screen 55 adjacent each other and between the substrates 1 and 11, parallax is elliminated or greatly reduced. This avoids the need for a collimator 57 so that the LCD can be used with a non-collimated backlight 56.

The polariser 3 is made as described hereinbefore and comprises a conjugated double bond polymer polariser. The chain length of such a polariser may easily be optimised for ultraviolet operation and the same type of polariser may be used as the external polariser 88.

## Claims

1. A method of making a cell wall of a liquid crystal spatial light modulator, comprising: forming a polariser (3,8) made of a stretched polymer comprising conjugated double bonds above a substrate (1,11); forming a first alignment layer (4,5,7,10) above the polariser (3,8) relative to the substrate; and curing the first alignment layer (5,7) at substantially 180°C or up to substantially 180°C for two hours or up to substantially two hours.

2. A method as claimed in Claim 1, **characterised in that** the first alignment layer (5,7) is cured at substantially 120°C or up to substantially 120°C for one hour or up to substantially one hour.

3. A method as claimed in Claim 1 or 2, **characterised in that** the first alignment layer (5,7) comprises polyimide.

4. A method as claimed in any preceding claim, **characterised in that**, following completion of the cell wall including at least one elevated temperature processing step, the polariser (3,8) has a contrast ratio of at least 10:1 at at least one operating wavelength of the spatial light modulator.

5. A method as claimed in Claim 4, **characterised in that** the contrast ratio is at least 100:1.

6. A method as claimed in any one of claims 4 or 5, **characterised in that** the at least one operating wavelength comprises a waveband having an upper limit greater than or equal to 600 nanometres and a lower limit less than or equal to 510 nanometres.

7. A method as claimed in Claim 6, **characterised in that** the upper limit is greater than or equal to 700 nanometres and the lower limit is less than or equal to 400 nanometres.

8. A method as claimed in any one of the preceding claims, **characterised in that** the polymer contains polyacetylene.

9. A method as claimed in any one of the preceding claims, **characterised in that**, following completion of the cell wall including at least one elevated temperature processing step, the polariser (3,8) has a transmission of polarised light of at least 50%.

10. A method as claimed in Claim 9, **characterised in that** the transmission is at least 80%.

11. A method as claimed in any one of the preceding claims, **characterised in that** the polariser (3,8) is formed on an adherent layer (2,9).

12. A method as claimed in Claim 11, **characterised in that** the adherent layer (2,9) comprises polyimide.

13. A method as claimed in Claim 12, **characterised in that**, after forming the polariser (3,8), the adherent layer (2,9) is cured at substantially 140°C or up to substantially 140°C for substantially thirty minutes or up to substantially thirty minutes.

14. A method as claimed in any one of Claims 11 to 13, **characterised in that** the adherent layer (2,9) is formed on the substrate (1,11).

15. A method as claimed in any on of Claims 11 to 13, **characterised in that** the adherent layer (2) is formed on a colour filter arrangement (1a) carried by the substrate (1).

16. A method as claimed in any one of Claims 11 to 13, **characterised in that** the adherent layer (2,9) is formed on an electrode (4,10) carried by the substrate (1,11).

17. A method as claimed in any one of Claims 1 to 15, **characterised in that** an electrode (4,10) is formed on the polariser (3,8).

18. A method as claimed in any preceding claim **characterised in that** at least one patterned retarder (18,22,26) is formed between the substrate (1) and the first alignment layer (5) before forming the first alignment layer (5).

19. A method as claimed in Claim 18, **characterised in that** the or each patterned retarder (18) is formed by: forming a second alignment layer (15); forming a retarder layer (16) on the second alignment layer (15); and selectively removing part of the retarder layer.

20. A method as claimed in Claim 18, **characterised in that** the patterned retarder (18) or one of the patterned retarders is formed by: forming a second alignment layer (15); forming a retarder layer (16) on the second alignment layer (15); curing part of the retarder layer (16) by exposure to ultraviolet radiation; forming the polariser (3) on the retarder layer (16); heating the retarder layer (16) above its isotropic transition point; and exposing the retarder layer (16) to ultraviolet radiation.

21. A method as claimed in Claim 18, **characterised in that** the retarder layer comprises a chiral retarder layer (21) and the polariser (3) is formed on the retarder layer (21) for which it acts as a further alignment layer.

22. A method as claimed in Claim 21, **characterised in that** the absorption direction of the polariser (3) is substantially perpendicular to the alignment direction of the second alignment layer (15).

23. A method as claimed in any one of Claims 18 to 22, **characterised in that** a plurality of patterned retarders (18,26) is formed with the alignment direction of the second alignment layer (15,24) of each of the patterned retarders (18,26) being different from the alignment direction of the second alignment layer (24,15) of each other of the patterned retarders (26,18).

24. A method as claimed in Claim 18, **characterised in that** the or each patterned retarder (18) is formed by: forming a layer of linearly photopolymerisable material (28); exposing first parts (A) of the material layer (28) to radiation of a first polarisation; and exposing second parts (B) of the material layer (28) to radiation of a second polarisation.

25. A method as claimed in Claim 18, **characterised in that** the or each patterned retarder (18) is formed by: forming a second alignment layer (15); rubbing the second alignment layer (15) in a first alignment direction; forming on the second alignment layer (15) a mask (30) which reveals predetermined regions (B) of the second alignment layer (15); rubbing the predetermined regions (B) in a second alignment direction different from the first alignment direction through the mask (30); removing the mask; and forming a retarder layer (16) on the second alignment layer (15)

26. A method as claimed in anyone of claims 1 to 16 and 18 to 25 for a plasma addressed liquid crystal spatial light modulator, **characterised in that** the substrate (1) includes a plasma switching arrangement (40,41,44-47).

27. A method as claimed in claim 26, **characterised in that** the plasma switching arrangement (41,41,44-47) comprises a plurality of channels (46), each of which contains a gas and first and second electrodes (40,41,44-47).

28. A method as claimed in claim 26 or 27, **characterised in that** the polariser (3) is disposed between a liquid crystal material (6) and the plasma switching arrangement (40,41,44-47).

29. A method as claimed in claim 27, **characterised in that** the polariser (3) is disposed inside channels (46).

30. A method as claimed in any one of claims 26 to 29, **characterised in that that** the substrate (1) is disposed between the polariser (3) and an external polariser (33) whose polarising direction is parallel to that of the polariser (3).

31. A method of making a liquid crystal spatial light modulator, **characterised by** making a first cell wall by a method as claimed in any one of the preceding claims, spacing the first cell wall from a second cell wall to form a gap, and filling the gap with a liquid crystal material (6).

32. A method as claimed in Claim 31, **characterised in that** the second cell wall is made by a method as claimed in any one of Claims 1 to 25.

33. A method as claimed in Claim 32 when dependent on any one of Claims 1 to 4, **characterised in that** the alignment directions of the first alignment layers (5,7) of the first and second cell walls are substantially orthogonal.

34. A method as claimed in Claim 33, **characterised in that** the liquid crystal material comprises a nematic liquid crystal and a chiral dopant.

## Patentansprüche

1. Verfahren zum Bilden einer Zellenwand eines räumlichen Flüssigkristall-Lichtmodulators mit folgenden Schritten: Ausbilden eines Polarisators (3, 8), der aus einem verstreckten Polymer mit konjugierten Doppelbindungen hergestellt wird, über einem Substrat (1, 11); Ausbilden einer ersten Ausrichtungsschicht (4, 5, 7, 10) bezüglich des Substrats über dem Polarisator (3, 8); und Aushärten der ersten Ausrichtungsschicht (5, 7) bei im wesentlichen 180°C oder bis hin zu im wesentlichen 180°C über zwei Stunden oder bis hin zu im wesentlichen zwei Stunden.

2. Verfahren nach Anspruch 1, **dadurch gekennzeichnet, dass** die erste Ausrichtungsschicht (5, 7) bei im wesentlichen 120°C oder bis hin zu im wesentlichen 120°C über eine Stunde oder bis hin zu im wesentlichen einer Stunde ausgehärtet wird.

3. Verfahren nach Anspruch 1 oder 2, **dadurch gekennzeichnet, dass** die erste Ausrichtungsschicht (5, 7) Polyimid aufweist.

4. Verfahren nach einem der vorangehenden Ansprüche, **dadurch gekennzeichnet, dass** nach Fertigstellung der Zellwand einschließlich wenigstens eines Bearbeitungsschritts mit erhöhter Temperatur der Polarisator (3, 8) ein Kontrastverhältnis von wenigstens 10:1 bei wenigstens einer Betriebswellenlänge des räumlichen Lichtmodulators besitzt.

5. Verfahren nach Anspruch 4, **dadurch gekennzeichnet, dass** das Kontrastverhältnis wenigstens 100:1 ist.

6. Verfahren nach Anspruch 4 oder 5, **dadurch gekennzeichnet, dass** die wenigstens eine Betriebswellenlänge ein Wellenband aufweist, das eine obere Grenze von größer oder gleich 600 Nanometer und eine untere Grenze von kleiner oder gleich 510 Nanometer besitzt.

7. Verfahren nach Anspruch 6, **dadurch gekennzeichnet, dass** die obere Grenze größer oder gleich 700 Nanometer und die untere Grenze kleiner oder gleich 400 Nanometer ist.

8. Verfahren nach einem der vorangehenden Ansprüche, **dadurch gekennzeichnet, dass** das Polymer Polyacetylen enthält.

9. Verfahren nach einem der vorangehenden Ansprüche, **dadurch gekennzeichnet, dass** nach Fertigstellung der Zellwand einschließlich wenigstens eines Bearbeitungsschritts mit erhöhter Temperatur der Polarisator (3, 8) eine Transmission polarisierten Lichts von wenigstens 50% besitzt.

10. Verfahren nach Anspruch 9, **dadurch gekennzeichnet, dass** die Transmission wenigstens 80% beträgt.

11. Verfahren nach einem der vorangehenden Ansprüche, **dadurch gekennzeichnet, dass** der Polarisator (3, 8) auf einer Haftschicht (2, 9) ausgebildet wird.

12. Verfahren nach Anspruch 11, **dadurch gekennzeichnet, dass** die Haftschicht (2, 9) Polyimid aufweist.

13. Verfahren nach Anspruch 12, **dadurch gekennzeichnet, dass** nach dem Ausbilden des Polarisators (3, 8) die Haftschicht (2, 9) bei im wesentlichen 140°C oder bis hin zu im wesentlichen 140°C über im wesentlichen dreißig Minuten oder bis hin zu im wesentlichen dreißig Minuten ausgehärtet wird.

14. Verfahren nach einem der Ansprüche 11 bis 13, **dadurch gekennzeichnet, dass** die Haftschicht (2, 9) auf dem Substrat (1, 11) ausgebildet wird.

15. Verfahren nach einem der Ansprüche 11 bis 13, **dadurch gekennzeichnet, dass** die Haftschicht (2) auf einer Farbfilteranordnung (1a) ausgebildet wird, die vom Substrat (1) getragen wird.

16. Verfahren nach einem der Ansprüche 11 bis 13, **dadurch gekennzeichnet, dass** die Haftschicht (2, 9) auf einer Elektrode (4, 10) ausgebildet wird, die vom Substrat (1, 11) getragen wird.

17. Verfahren nach einem der Ansprüche 1 bis 15, **dadurch gekennzeichnet, dass** eine Elektrode (4, 10) auf dem Polarisator (3, 8) ausgebildet wird.

18. Verfahren nach einem der vorangehenden Ansprüche, **dadurch gekennzeichnet, dass** wenigstens ein gemusterter Verzögerer (18, 22, 26) zwischen dem Substrat (1) und der ersten Ausrichtungsschicht (5) ausgebildet wird, bevor die erste Ausrichtungsschicht (5) ausgebildet wird.

19. Verfahren nach Anspruch 18, **dadurch gekennzeichnet, dass** der oder jeder gemusterte Verzögerer (18) durch folgende Schritte gebildet wird: Ausbilden einer zweiten Ausrichtungsschicht (15); Ausbilden einer Verzögerungsschicht (16) auf der zweiten Ausrichtungsschicht (15); und selektives Entfernen eines Teils der Verzögerungsschicht.

20. Verfahren nach Anspruch 18, **dadurch gekennzeichnet, dass** der gemusterte Verzögerer (18) oder einer der gemusterten Verzögerer durch folgende Schritte gebildet wird: Ausbilden einer zweiten Ausrichtungsschicht (15); Ausbilden einer Verzögerungsschicht (16) auf der zweiten Ausrichtungsschicht (15); Aushärten eines Teils der Verzögerungsschicht (16) durch Belichten mit Ultraviolett-Strahlung; Ausbilden des Polarisators (3) auf der Verzögerungsschicht (16); Erhitzen der Verzögerungsschicht (16) über ihren isotropen Übergangspunkt hinaus; und Belichten der Verzögerungschicht (16) mit Ultraviolett-Strahlung.

21. Verfahren nach Anspruch 18, **dadurch gekennzeichnet, dass** die Verzögerungsschicht eine optisch aktive Schicht (21) aufweist und der Polarisator (3) auf der Verzögerungsschicht (21) ausgebildet wird, für die er als weitere Ausrichtungsschicht dient.

22. Verfahren nach Anspruch 21, **dadurch gekennzeichnet, dass** die Absorptionsrichtung des Polarisators (3) im wesentlichen senkrecht zur Ausrichtungsrichtung der zweiten Ausrichtungsschicht (15) ist.

23. Verfahren nach einem der Ansprüche 18 bis 22, **dadurch gekennzeichnet, dass** eine Mehrzahl von gemusterten Verzögerern (18, 26) ausgebildet wird, wobei sich die Ausrichtungsrichtung der zweiten Ausrichtungsschicht (15, 24) eines jeden der gemusterten Verzögerer (18, 26) von der Ausrichtungsrichtung der zweiten Ausrichtungsschicht (24, 15) eines jeden anderen der gemusterten Verzögerer (26, 18) unterscheidet.

24. Verfahren nach Anspruch 18, **dadurch gekennzeichnet, dass** der oder jeder gemusterte Verzögerer (18) durch folgende Schritte gebildet wird: Ausbilden einer Schicht linear photopolymerisierbaren Materials (28); Bestrahlen von ersten Teilen (A) der Materialschicht (28) mit Strahlung einer ersten Polarisation; und Bestrahlen von zweiten Teilen (B) der Materialschicht (28) mit Strahlung einer zweiten Polarisation.

25. Verfahren nach Anspruch 18, **dadurch gekennzeichnet, dass** der oder jeder gemusterte Verzögerer (18) durch folgende Schritte gebildet wird: Ausbilden einer zweiten Ausrichtungsschicht (15); Reiben der zweiten Ausrichtungsschicht (15) in einer ersten Ausrichtungsrichtung; Ausbilden einer Maske (30) auf der zweiten Ausrichtungsschicht (15), die vorbestimmte Bereiche (B) der zweiten Ausrichtungsschicht (15) enthüllt; Reiben der vorbestimmten Bereiche (B) durch die Maske (30) in einer zweiten Ausrichtungsrichtung, die sich von der ersten Ausrichtungsrichtung unterscheidet; Entfernen der Maske; und Ausbilden einer Verzögerungsschicht (16) auf der zweiten Ausrichtungsschicht (15).

26. Verfahren nach einem der Ansprüche 1 bis 16 und 18 bis 25 für einen plasmabezogenen, räumlichen Flüssigkristall-Lichtmodulator, **dadurch gekennzeichnet, dass** das Substrat (1) eine Plasma-Schaltanordnung (40, 41, 44-47) aufweist.

27. Verfahren nach Anspruch 26, **dadurch gekennzeichnet, dass** die Plasma-Schaltanordnung (40, 41, 44-47) eine Mehrzahl von Kanälen (46) aufweist, von denen jeder ein Gas und eine erste und eine zweite Elektrode (40, 41, 44-47) enthält.

28. Verfahren nach Anspruch 26 oder 27, **dadurch gekennzeichnet, dass** der Polarisator (3) zwischen einem Flüssigkristallmaterial (6) und der Plasma-Schaltanordnung (40, 41, 44-47) angeordnet wird.

29. Verfahren nach Anspruch 27, **dadurch gekennzeichnet, dass** der Polarisator (3) innerhalb der Kanäle (46) angeordnet wird.

30. Verfahren nach einem der Ansprüche 26 bis 29, **dadurch gekennzeichnet, dass** das Substrat (1) zwischen dem Polarisator (3) und einem externen Polarisator (33) angeordnet wird, dessen Polarisationsrichtung parallel zu der des Polarisators (3) ist.

31. Verfahren zum Herstellen eines räumlichen Flüssigkristall-Lichtmodulators, **gekennzeichnet durch** die Schritte, eine erste Zellenwand **durch** ein Verfahren nach einem der vorangehenden Ansprüche herzustellen, die erste Zellenwand beabstandet von einer zweiten Zellenwand anzuordnen, um eine Lücke zu bilden, und die Lücke mit einem Flüssigkristallmaterial (6) zu füllen.

32. Verfahren nach Anspruch 31, **dadurch gekennzeichnet, dass** die zweite Zellenwand über ein Verfahren nach einem der Ansprüche 1 bis 25 hergestellt wird.

33. Verfahren nach Anspruch 32, sofern bezogen auf einen der Ansprüche 1 bis 4, **dadurch gekennzeichnet, dass** die Ausrichtungsrichtungen der ersten Ausrichtungsschichten (5, 7) der ersten und zweiten Zellenwand im wesentlichen senkrecht zueinander sind.

34. Verfahren nach Anspruch 33, **dadurch gekennzeichnet, dass** das Flüssigkristallmaterial einen nematischen Flüssigkristall und eine optisch aktive Dotiersubstanz aufweist.

## Revendications

1. Procédé de fabrication d'une paroi de cellule d'un modulateur optique spatial à cristaux liquides, comprenant les étapes consistant à : former un polariseur (3, 8) constitué d'un polymère étiré comprenant des doubles liaisons conjuguées au-dessus d'un substrat (1, 11) ; former une première couche d'alignement (4, 5, 7, 10) au-dessus du polariseur (3, 8) par rapport au substrat ; et traiter la première couche d'alignement (5, 7) à une température pratiquement égale à 180°C ou jusqu'à pratiquement 180°C pendant deux heures ou jusqu'à pratiquement deux heures.

2. Procédé selon la revendication 1, **caractérisé en ce que** la première couche d'alignement (5, 7) est traitée à une température pratiquement égale à 120°C ou jusqu'à pratiquement 120°C pendant une heure ou jusqu'à pratiquement une heure.

3. Procédé selon la revendication 1 ou 2, **caractérisé en ce que** la première couche d'alignement (5, 7) comprend du polyimide.

4. Procédé selon l'une quelconque des revendications précédentes, **caractérisé en ce que**, suite à la réalisation de la paroi de cellule incluant au moins une étape de traitement avec montée en température, le polariseur (3, 8) présente un rapport de contraste d'au moins 10:1 pour au moins une longueur d'onde de fonctionnement du modulateur optique spatial.

5. Procédé selon la revendication 4, **caractérisé en ce que** le rapport de contraste est d'au moins 100:1.

6. Procédé selon l'une quelconque des revendications 4 ou 5, **caractérisé en ce que** ladite au moins une longueur d'onde de fonctionnement comprend une gamme d'ondes ayant une limite haute supérieure ou égale à 600 nanomètres et une limite basse inférieure ou égale à 510 nanomètres.

7. Procédé selon la revendication 6 **caractérisé en ce que** la limite haute est supérieure ou égale à 700 nanomètres et la limite basse est inférieure ou égale à 400 nanomètres.

8. Procédé selon l'une quelconque des revendications précédentes, **caractérisé en ce que** le polymère contient du polyacéthylène.

9. Procédé selon l'une quelconque des revendications précédentes, **caractérisé en ce que**, suite à la réalisation de la paroi de cellule incluant au moins une étape de traitement de montée en température, le polariseur (3, 8) présente une transmission de la lumière polarisée d'au moins 50 %.

10. Procédé selon la revendication 9, **caractérisé en ce que** la transmission est d'au moins 80 %.

11. Procédé selon l'une quelconque des revendications précédentes, **caractérisé en ce que** le polariseur (3, 8) est réalisé sur une couche adhérente (2, 9).

12. Procédé selon la revendication 11, **caractérisé ce que** la couche adhérente (2, 9) comprend du polyimide.

13. Procédé selon la revendication 12, **caractérisé en ce que**, après la réalisation du polariseur (3, 8), la couche adhérente (2, 9) est traitée à une température de pratiquement 140°C ou jusqu'à pratiquement 140°C pour pratiquement 30 minutes ou jusqu'à pratiquement 30 minutes.

14. Procédé selon l'une quelconque des revendications 11 à 13, **caractérisé en ce que** la couche adhérente (2, 9) est réalisée sur le substrat (1, 11).

15. Procédé selon l'une quelconque des revendications 11 à 13, **caractérisé en ce que** la couche adhérente (2) est réalisée sur une disposition de filtre couleur (1a) portée par le substrat (1).

16. Procédé selon l'une quelconque des revendications 11 à 13, **caractérisé en ce que** la couche adhérente (2, 9) est réalisée sur une électrode (4, 10) portée par le substrat (1, 11).

17. Procédé selon l'une quelconque des revendications 1 à 15, **caractérisé en ce qu'**une électrode (4, 10) est formée sur le polariseur (3,8).

18. Procédé selon l'une quelconque des revendications précédentes, **caractérisé en ce qu'**au moins un dispositif de retardement gravé (18, 22, 26) est réalisé entre le substrat (1) et la première couche d'alignement (5) avant de réaliser la première couche d'alignement (5).

19. Procédé selon la revendication 18, **caractérisé en ce que** le ou les dispositifs de retardement gravés (18) sont réalisés au moyen des étapes consistant à : former une seconde couche d'alignement (15) ; former une couche de retardement (16) sur la seconde couche d'alignement (15) ; et éliminer sélectivement une partie de la couche de retardement.

20. Procédé selon la revendication 18, **caractérisé en ce que** le dispositif de retardement gravé (18) ou l'un des dispositifs de retardement gravé est réalisé au moyen des étapes consistant à : former une seconde couche d'alignement (15) ; former une couche de retardement (16) sur la seconde couche d'alignement (15) ; traiter une partie de la couche de retardement (16) par exposition à un rayonnement ultraviolet ; former le polariseur (3) sur la couche de retardement (16) ; chauffer la couche de retardement (16) au-dessus de son point de transition isotrope ; et exposer la couche de retardement (16) à un rayonnement ultraviolet.

21. Procédé selon la revendication 18, **caractérisé en ce que** la couche de retardement comprend une couche de retardement chirale (21) et le polariseur (3) est formé sur la couche de retardement (21) pour laquelle il joue le rôle d'une couche d'alignement supplémentaire.

22. Procédé selon la revendication 21, **caractérisé en ce que** la direction d'absorption du polariseur (3) est pratiquement perpendiculaire à la direction d'alignement de la seconde couche d'alignement (15).

23. Procédé selon l'une quelconque des revendications 18 à 22, **caractérisé en ce qu'**une pluralité des dispositifs de retardement gravés (18, 26) est formée, la direction d'alignement de la seconde couche d'alignement (15, 24) de chacun des dispositifs de retardement gravés (18, 26) étant différente de la direction d'alignement de la seconde couche d'alignement (24, 15) de chacun des autres des dispositifs de retardement gravés (26, 18).

24. Procédé selon la revendication 18, **caractérisé en ce que** le ou les dispositifs de retardement (18) sont réalisés au moyen des étapes consistant à : former une couche de matériau linéairement photopolymérisable (28) ; exposer des premières parties (A) de la couche de matériau (28) au rayonnement d'une première polarisation ; et exposer des secondes parties (B) de la couche de matériau (28) au rayonnement d'une seconde polarisation.

25. Procédé selon la revendication 18, **caractérisé en ce que** le ou les dispositifs de retardement gravés (18) sont réalisés au moyen des étapes consistant à : former une seconde couche d'alignement (15) ; polir la seconde couche d'alignement (15) dans une première direction d'alignement ; former sur la seconde couche d'alignement (15) un masque (30) qui révèle des régions prédéterminées (B) de la seconde couche d'alignement (15) ; polir les régions prédéterminées (B) dans une seconde direction d'alignement différente de la première direction d'alignement au travers du masque (30) ; éliminer le masque ; et former une couche de retardement (16) sur la seconde couche d'alignement (15).

26. Procédé selon l'une quelconque des revendications 1 à 16 et 18 à 25 pour un modulateur optique spatial à cristaux liquides à adressage par plasma, **caractérisé en ce que** le substrat (1) comprend une disposition de commutation à plasma (40, 41, 44-47).

27. Procédé selon la revendication 26, **caractérisé en ce que** la disposition de commutation à plasma (41, 41, 44-47) comprend une pluralité de canaux (46), chacun d'eux contenant un gaz et des première et seconde électrodes (40, 41, 44-47).

28. Procédé selon la revendication 26 ou 27, **caractérisé en ce que** le polariseur (3) est disposé entre un matériau cristal liquide (6) et la disposition de commutation à plasma (40, 41, 44-47).

29. Procédé selon la revendication 27, **caractérisé en ce que** le polariseur (3) est disposé à l'intérieur des canaux (46).

30. Procédé selon l'une quelconque des revendications 26 à 29, **caractérisé en ce que** le substrat (1) est disposé entre le polariseur (3) et un polariseur externe (33) dont la direction de polarisation est parallèle à celle du polariseur (3).

31. Procédé de fabrication d'un modulateur optique spatial à cristaux liquides, **caractérisé par** la fabrication d'une première paroi de cellule au moyen d'un procédé conforme à l'une quelconque des revendications précédentes, l'espacement de la première paroi de cellule par rapport à une seconde paroi de cellule pour former un espace et le remplissage de l'espace au moyen d'un matériau cristal liquide (6).

32. Procédé selon la revendication 31, **caractérisé en ce que** la seconde paroi de cellule est fabriquée au moyen d'un procédé conforme à l'une quelconque des revendications 1 à 25.

33. Procédé selon la revendication 32, lorsqu'elle dépend de l'une quelconque des revendications 1 à 4, **caractérisé en ce que** les directions d'alignement des premières couches d'alignement (5, 7) des première et seconde parois de cellule sont pratiquement orthogonales.

34. Procédé selon la revendication 33, **caractérisé en ce que** le matériau cristal liquide comprend des cristaux liquides nématiques et un agent dopant chiral.
